# EUROPÄISCHE PATENTSCHRIFT

(11) **EP 3 525 924 B1**
(45) Veröffentlichungstag und Bekanntmachung des Hinweises auf die Patenterteilung: **05.01.2022**
(21) Anmeldenummer: 17781477.9
(22) Anmeldetag: 10.10.2017
(51) Int. Cl.: B01F 17/00, C11D 1/83, C11D 17/00

(54) **WASCHMITTELZUSAMMENSETZUNG MIT FLIESSGRENZE**
DETERGENT COMPOSITION HAVING A FLOW LIMIT
COMPOSITION DE DÉTERGENTS À LIMITE D'ÉCOULEMENT

(30) Priorität: 12.10.2016 DE 102016219862
(43) Veröffentlichungstag der Anmeldung: 21.08.2019
(73) Patentinhaber: Henkel AG & Co. KGaA, 40589 Düsseldorf (DE)
(72) Erfinder: KLEMMER, Anna, 40597 Düsseldorf (DE); SCHMIEDEL, Peter, 40591 Düsseldorf (DE); YAPICI, Filiz, 40231Düsseldorf (DE); MOROZOVA, Olga, 40549 Düsseldorf (DE)
(86) Internationale Anmeldenummer: PCT/EP2017/075815
(87) Internationale Veröffentlichungsnummer: WO 2018/069322

(56) Entgegenhaltungen:
- DE-A1- 10 129 517
- JP-A- 2005 239 674
- US-A- 4 472 291

## Beschreibung

Die vorliegende Erfindung liegt auf dem technischen Gebiet flüssiger Tensidzusammensetzungen und betrifft die Erzeugung einer Fließgrenze in besagten flüssigen Tensidzusammensetzungen. Ferner betrifft die vorliegende Erfindung ein Verfahren zur Herstellung einer Mikroemulsion eines nicht-polymeren, organischen Verdickungsmittels und die Herstellung der besagten flüssigen Tensidzusammensetzungen mit Fließgrenze unter Verwendung der besagten Mikroemulsion.

Zur Einarbeitung in flüssige Tensidzusammensetzungen, insbesondere Wasch- oder Reinigungsmittel, bieten sich entweder solche Inhaltsstoffe an, die sich in der flüssigen Phase des Mittels lösen oder sich ungelöst entsprechend homogen suspendieren lassen. Im Falle von unlöslichen Inhaltsstoffen ist eine stabile, homogene Suspension für die Funktion und Ästhetik des Wasch- oder Reinigungsmittels notwendig. Sedimentierte Feststoffpartikel können Verklumpen und bei der Anwendung zu lokalen Überkonzentrationen des Inhaltsstoffes und damit zur ungleichmäßigen Dosierung je Waschladung führen. Sichtbare Verklumpungen, schmierige Niederschläge oder Ablagerungen des festen Inhaltsstoffs an eine z.B. transparente Wandung des Vorratsgefäßes bedeuten zudem einen ästhetischen Makel.

Die Einarbeitung einiger ggf. eingefärbter, vom nackten menschlichen Auge in Suspension in einer transparenten oder transluzenten, flüssigen Phase als individualisierte Teilchen erkennbare Feststoffpartikel, werden oftmals als Speckles bezeichnet. Entsprechende Partikel weisen zu diesem Zweck eine entsprechende Partikelgröße auf und bieten dem Verbraucher einen ästhetischen Reiz. Mikrokapseln sind ebenso feste Inhaltsstoffe und umfassen jede dem Fachmann bekannte Art von Kapsel, insbesondere jedoch Kern-Schale-Kapseln und Matrixkapseln. Matrixkapseln sind poröse Formkörper, die eine Struktur ähnlich zu einem Schwamm aufweisen. Kern-Schale-Kapseln sind Formkörper, die einen Kern und eine Schale aufweisen. Allerdings neigen alle diese Feststoffpartikel, insbesondere die Speckles, in flüssigen Tensidzusammensetzungen zur Sedimentation.

Die Sedimentation von Partikeln aus der Suspension wird üblicherweise durch die Verwendung von Tensidzusammensetzungen mit einer Fließgrenze vermieden. Eine Fließgrenze kann durch die Auswahl spezieller Tensidkombinationen meist in Gegenwart eines Elektrolytsalzes durch Etablierung einer lamellaren Phase erzeugt werden. Auch der Einsatz ausgewählter polymerer Verdicker ist für eine Erzeugung einer Fließgrenze denkbar.

Insbesondere Tensidzusammensetzungen mit hoher Tensidkonzentration lassen sich schwer mit einer Fließgrenze im Bereich von 0,01 bis 5 Pa ausstatten. Durch Ausnutzung lyotroper flüssigkristalliner Mesophasen wird bei hoher Tensidkonzentration meist eine zu hohe Fließgrenze erzielt. Das Fließverhalten ist in einem solchen Fall inhomogen (sogenanntes "klumpiges" Fließen). Ferner führt eine zu hohe Fließgrenze dazu, dass die suspendierten Partikel an der Wandung des Vorratsgefäßes der Tensidzusammensetzung anhaften. Werden polymere Verdicker zur Ausbildung der Fließgrenze herangezogen, gelingt dies bei hoher Tensidkonzentration manchmal unter Verwendung einer sehr hohen Menge des polymeren Verdickers, oft gelingt es gar nicht. Große Verdickermengen beeinträchtigen die Reinigungsleistung von Tensidzusammensetzungen, was insbesondere bei der Textilbehandlung zusätzlich zu einer Vergrauung des Textils führen kann.

Die Druckschriften WO 2011/120772 und WO 2011/120799 betreffen die Herstellung von Flüssigwaschmitteln mit Fließgrenze, wobei vorab ein bereits strukturierter Premix mit Fließgrenze hergestellt und dieser mit einer wäßrigen Tensidzusammensetzung vermischt wird.

Die Druckschrift WO 2011/031940 betrifft ein Strukturierungsmittel für flüssige und gelförmige Waschmittel, das 2 bis 10 Gew.-% Kristalle eines Glyzerids, bevorzugt hydriertes Rizinusöl, und 2 bis 10 Gew.-% Alkanolamin und 5 bis 60 Gew.-% des Anions eines anionischen Tensid, aber keine anorganischen Kationen enthält.

Die Druckschrift WO 2002/40627 betrifft wässrige Flüssigwaschmittel, die ein für Textilien substantives Mittel mit geringer Löslichkeit, ein kristallines hydroxylgruppen-haltiges Stabilisierungsmittel und einen nicht-tensidischen, gelösten Inhaltsstoff enthalten. Der zur Herstellung des Flüssigwaschmittels eingesetzte Premix enthält Wasser, Tensid und 0,1 bis 5 Gew.-% des besagten Verdickungsmittels in kristalliner Form als Feststoff.

Die Druckschrift WO 2005/012475 betrifft ebenso Flüssigwaschmitte mit Fließgrenze, die durch den Einsatz eines bereits strukturierten Premixes, enthaltend ein hydroxylgruppen-haltiges Verdickungsmittel in kristalliner Form, hergestellt werden.

Die Druckschrift WO 2015/200062 betrifft einen Premix zur Herstellung von Flüssigwaschmitteln mit Fließgrenze, der bereits durch ein kristallines hydroxylgruppen-haltiges Verdickungsmittel strukturiert ist und zusätzlich ein Alkylsulfattensid enthält. DE 10129517 und US 4472291 offenbaren Mikroemulsionen, die Verdickungsmittel enthalten. Die US 2005/239674 offenbart ein Reinigungsmittel, das anorganische oder organische Verdickungsmittel enthält.

Die vorbeschriebenen Premixe des Standes der Technik sind gemäß Offenbarung der zitierten Druckschriften flüssig, viskos und bereits strukturiert. Dennoch enthalten sie wenig strukturierend wirkendes Verdickungsmittel, wodurch durch den Premix bei der Herstellung der Flüssigwaschmittel entweder viel Wasser oder viel Fremdtensid in das finale Flüssigwaschmittel eingeschleppt wird. Der nacharbeitende Fachmann stellt fest, dass die nach den Herstellvorschriften des Standes der Technik zubereiteten Premixe eine inhomogene Einarbeitung des Verdickungsmittels aufweisen und sich dadurch schlecht dosieren lassen. Flüssigwaschmittel, die mit den Premixen des Standes der Technik hergestellt werden, haben einen Niederschlag und besitzen keine Fließgrenze.

Der vorliegenden Erfindung liegt die Aufgabe zugrunde, flüssige Tensidzusammensetzungen, insbesondere Wasch- oder Reinigungsmittel mit hervorragender Wasch- bzw. Reinigungskraft, bereitzustellen, die eine Fließgrenze aufweisen und in die sich Feststoffpartikel (insbesondere Speckles) homogen suspendieren lassen, so dass diese bei Lagerbedingungen stabil in Suspension verbleiben.

Für diesen Zweck sollen beliebige flüssige Tensidzusammensetzungen ohne Fließgrenze durch Zusatz eines Verdickungsmittels strukturiert werden, ohne dass das Tensidsystem der resultierenden flüssigen Tensidzusammensetzung mit Fließgrenze im Vergleich zur unstrukturierten Tensidzusammensetzung durch den Zusatz eines das strukturierende Verdickungsmittel enthaltenden, flüssigen Premixes eine wesentliche Änderung erfährt. Es sollen durch den eingesetzten Premix einerseits möglichst wenige zusätzliche Fremdtenside in die flüssige Tensidzusammensetzung eingeschleppt werden. Anderseits soll der zur Strukturierung eingesetzte Premix in geringer Menge verwendet werden.

Zudem war es eine Aufgabe, ein Herstellungsverfahren für besagte flüssige Tensidzusammensetzungen bereitzustellen, in dem - insbesondere in einem kontinuierlichen Herstellprozess - ein Verdickungsmittel leicht dosierbar ist und möglichst wenig Ablagerungen in der Produktionsanlage bildet.

Überraschenderweise wurde festgestellt, dass sich durch Einsatz einer Mikroemulsion eines nicht-polymeren Verdickungsmittels flüssige Tensidzusammensetzungen mit einer Fließgrenze herstellen lassen. Werden diese Tensidzusammensetzungen als kontinuierliche Phase einer Suspension genutzt, so ist die feste Phase darin homogen und stabil suspendiert. Zudem lassen sich thermodynamisch mehrphasige Tensidformulierungen an einer makroskopischen Auftrennung hindern. Durch den Zusatz der besagten Mikroemulsion kann eine Formulierung, die ähnlich einer Emulsion aus mehreren nicht mischbaren Flüssigphasen besteht, in ein lagerstabiles, makroskopisch einphasiges und homogenes Produkt umgewandelt werden.

Die zur Erzielung der Fließgrenze eingesetzte Mikroemulsion lässt sich aufgrund ihrer Fließfähigkeit leicht verarbeiten und dosieren.

Ein erster Erfindungsgegenstand ist daher eine Mikroemulsion, enthaltend jeweils bezogen auf das Gesamtgewicht der Emulsion
a) eine flüssige Phase,
b) eine Gesamtmenge von 30,0 Gew.-% bis 95,0 Gew.-% mindestens eines nicht-polymeren, organischen Verdickungsmittels mit einem Molekulargewicht im Bereich von 100 g/mol bis 1500 g/mol als emulgierte Phase,
c) eine Gesamtmenge von 2,0 Gew.-% bis 60,0 Gew.-% eines Tensidsystems, enthaltend mindestens ein nichtionisches Tensid.

Im Sinne der Erfindung gilt für die Definition eines Zahlenbereichs, welcher "zwischen" zwei Bereichsgrenzen liegen soll, dem allgemeinen Sprachgebrauch folgend, dass die die Bereichsgrenzen nicht mit eingeschlossen sind. Zahlenbereiche, die von einer Bereichsgrenze bis zu einer anderen Bereichsgrenze definiert sind, schließen die Bereichsgrenzen mit ein.

Generell bedeutet "mindestens ein", wie hierin verwendet, 1, 2, 3, 4, 5, 6, 7, 8, 9 oder mehr, wobei sich die Angabe auf die Art des genannten Stoffes und nicht die absolute Anzahl der Moleküle bezieht.

Die erfindungsgemäßen Tensidzusammensetzungen erhalten ihre erfindungsgemäße Fließgrenze durch den Einsatz besagter Mikroemulsionen mit nicht-polymerem, organischem Verdickungsmittel.

Die Fließgrenze bezeichnet die kleinste Spannung (Kraft pro Fläche), oberhalb derer ein plastischer Stoff sich rheologisch wie eine Flüssigkeit verhält. Sie wird daher in Pascal (Pa) angegeben.

Die Fließgrenzen der Wasch- oder Reinigungsmittel wurden mit einem Rotationsrheometer der Firma TA-Instruments, Typ AR G2 gemessen. Hierbei handelt es sich um ein so genanntes schubspannungskontrolliertes Rheometer.

Zur Messung einer Fließgrenze mit einem schubspannungskontrollierten Rheometer sind in der Literatur verschiedene Verfahren beschrieben, die dem Fachmann bekannt sind.

Zur Bestimmung der Fließgrenzen im Rahmen der vorliegenden Erfindung wurde bei 20 °C folgendermaßen vorgegangen:
Die Proben wurden im Rheometer in einer "Stepped-Flow-Prozedur" mit einer mit der Zeit stufenweise ansteigenden Schubspannung σ beaufschlagt. Beispielsweise kann die Schubspannung im Laufe von 10 Minuten mit 10 Punkten pro Schubspannungsdekade vom kleinstmöglichen Wert (z.B. 2 mPa) auf z.B. 10 Pa gesteigert werden. Das Zeitintervall wird dabei so gewählt, dass die Messung "quasistatisch" erfolgt, d.h. dass sich die Deformation der Probe für jeden vorgegebenen Schubspannungswert ins Gleichgewicht begeben kann. Als Funktion dieser Schubspannung wird die Gleichgewichts-Deformation γ der Probe gemessen. Die Deformation wird in einem doppellogarithmischen Plot gegen die Schubspannung aufgetragen. Sofern die untersuchte Probe eine Fließgrenze aufweist, kann man in diesem Plot deutlich zwei Bereiche unterscheiden. Unterhalb einer gewissen Schubspannung findet man eine rein elastische Deformation gemäß dem Hooke'schen Gesetz. Die Steigung der Kurve γ(σ) (log-log-Plot) in diesem Bereich ist eins. Oberhalb dieser Schubspannung beginnt der Fließbereich und die Steigung der Kurve ist sprunghaft höher. Diejenige Schubspannung bei der das Abknicken der Kurve erfolgt, also der Übergang von der elastischen in eine plastischen Deformation, markiert die Fließgrenze. Eine bequeme Bestimmung des Knickpunktes ist durch Anlegen von Tangenten an die beiden Kurventeile möglich. Proben ohne Fließgrenze weisen keinen charakteristischen Knick in der Funktion γ(σ) auf.

Unter einem nicht-polymeren Verdickungsmittel wird erfindungsgemäß eine Verbindung mit Verdickungswirkung verstanden, die nicht durch Polyreaktion von Monomeren erhalten wird. Monomere sind Moleküle, die durch Polyreaktion ein Polymer bilden, wobei Letzteres in dessen Molekülstruktur Wiederholungseinheiten aufweist, die aus dem Monomer resultieren. Ein Polymer weist in seiner Molekülstruktur mindestens 10 aus demselben Monomer resultierende Wiederholungseinheiten auf.

Ein Verdickungsmittel weist eine Verdickungswirkung auf, wobei es in einer Einsatzmenge von 0,1 Gew.-% die Viskosität der erfindungsgemäßen Tensidzusammensetzung um mindestens 500 mPas erhöht.

Die Viskosität wird im Rahmen dieser Erfindung, falls nicht anders beschrieben, mit einem Rotationsrheometer (Kegel-Platte (40 mm Durchmesser, 2° Kegelwinkel)) bei 0,5 rpm und 20°C bestimmt.

Ein Stoff (z.B. Verdickungsmittel) ist organisch, wenn er Kohlenstoffatome und daran gebundene Wasserstoffatome enthält.

Ein Stoff (z.B. die erfindungsgemäße Tensidzusammensetzung) ist falls nicht anders definiert eine Flüssigkeit, wenn er bei 25°C und 1013 mbar flüssig ist.

Ein Stoff ist falls nicht anders definiert ein Feststoff, wenn er bei 1013 mbar einen Schmelzpunkt von kleiner 25°C aufweist. Kapseln gelten im Sinne der Erfindung als Feststoff, wenn sie trotz der ggf. in ihnen enthaltenen flüssigen Bestandteile, makroskopisch bei 20°C als Feststoff vorliegen.

Im Rahmen der Erfindung ist eine Mikroemulsion definiert als eine bei einer definierten Temperatur und 1013 mbar als jeweils mit bloßem Auge erkennbar homogen und transparent vorliegende Dispersion mindestens zweier, bei dieser Temperatur und bei 1013 mbar jeweils flüssig vorliegender und nicht miteinander mischbarer Phasen.

Innerhalb des homogenen und transparenten Einphasenbereiches befinden sich in Abhängigkeit der Gesamttensidkonzentration und/oder Temperatur unterschiedliche Nanostrukturen. Die Strukturgröße nimmt bei steigender Tensidkonzentration ab. Bei einer temperaturabhängigen Bestrachtung der Strukturgrößen bei einer konstanten Tensidkonzentration invertieren die kontinuierlichen Domänen von z.B. wasserkontinuierlich zu ölkontinuierlich (oder vice versa). Dabei können auch bikontinuierliche Bereiche oder doppelschichtige Strukturen durchlaufen werden. Bei Mikroemulsionen findet man darüber hinaus auch bikontinuierliche Strukturen. Meistens sind Mikroemulsionen klar, da ihre Strukturgröße im nm-Bereich deutlich unterhalb der Wellenlänge des sichtbaren Lichtes liegt. Die Klarheit wird im Rahmen der vorliegenden Erfindung auch als Indikator für das Vorliegen einer Mikroemulsion gewertet. Nach Winsor können Mikroemulsionssysteme bestehend aus einer Wasserkomponente, einer Ölkomponente und einem Tensid (auch: Amphiphil) gemäß ihrer Phasengleichgewichte in 4 Typen unterteilt werden.

Bei einem Mikroemulsionssystem vom Winsor Typ I ist das Tensid vor allem in Wasser und in einer O/W-Mikroemulsionsform löslich. Es besteht aus einer tensidreichen wässerigen Phase (O/W-Mikroemulsion) und einer überschüssigen, aber tensidarmen Ölphase.

Bei einem Mikroemulsionssystem vom Winsor Typ II ist das Tensid vor allem in einer Ölphase und in einer W/O-Mikroemulsionsform löslich. Sie besteht aus einer tensidreichen Ölphase (W/O-Mikroemulsion) und einer überschüssigen, aber tensidarmen wässerigen Phase.

Ein Mikroemulsionssystem vom Winsor Typ III stellt eine häufig bikontinuierliche Mikroemulsion dar, die auch Mittelphasen-Mikroemulsion genannt wird, aus einer tensidreichen mittleren Phase, welche mit einer tensidarmen wässerigen Phase wie auch einer tensidarmen Ölphase koexistiert.

Ein Mikroemulsionssystem vom Winsor Typ IV hingegen ist eine einphasige homogene Mischung und stellt im Gegensatz zu den Winsor Typen I bis III, die aus 2 oder 3 Phasen bestehen, von denen nur eine Phase eine Mikroemulsion darstellt, insgesamt eine Mikroemulsion dar.

Die erfindungsgemäßen Mikroemulsionen sind homogen, thermodynamisch stabil und optisch isotrop.

Ein Stoff gilt als transparent, wenn bei einer Schichtdicke des Stoffes von 1 cm ein mit Abstand von 1 cm hinter dem Stoff positionierter Buchstabe "A" (Times New Roman, Schriftgröße 12 pt.) durch den Stoff hindurch mit bloßem Auge lesbar ist.

Ein Tensidsystem besteht erfindungsgemäß aus mindestens einer amphiphilen Verbindung als Bestandteil der Mikroemulsion, wobei sich die amphiphilen Verbindungen des Tensidsystems von dem besagten Verdickungsmittel und der besagten flüssigen Phase unterscheiden. Das erfindungsgemäße Tensidsystem enthält als amphiphile Verbindung zwingend mindestens ein nichtionisches Tensid, kann aber auch zusätzlich weitere Tenside enthalten.

Das in der erfindungsgemäßen Mikroemulsion enthaltene Tensidsystem mit mindestens einem nichtionischen Tensid zeichnet sich bevorzugt durch eine besonders niedrige Grenzflächenspannung gegenüber dem besagten Verdickungsmittel aus. Bevorzugt sind Grenzflächenspannungen < 5 mN/m, besonders bevorzugt < 0,5 mN/m und ganz besonders bevorzugt < 0,05 mN/m. Das erfindungsgemäß eingesetzte Tensidsystem ist generell geeignet, eine Mikroemulsion zu bilden. Dementsprechend bedeutet "geeignet eine Mikroemulsion zu bilden", wie im Kontext mit den hierin beschriebenen Mikroemulsionen verwendet, dass diese Mikroemulsionen ein Tensidsystem mit den beschriebenen Eigenschaften umfassen und unter den im Folgenden beschriebenen Testbedingungen, d.h. bei einer Temperatur im Bereich von 0 bis 100°C, vorzugsweise 40 bis 98°C, noch bevorzugter 75 bis 95°C, und einem Wasser:ÖI-System mit einem Massenverhältnis von Wasser:ÖI von 99:1 bis 9:1, wobei das Öl beispielsweise ein Triacylglyzerid, wie insbesondere hydriertes Rizinusöl, ist, eine Mikroemulsion vom Winsor Typ IV bilden können.

Unter "Fischschwanzpunkt", wie hierin verwendet, ist die maximale Ausdehnung des einphasigen, optisch isotropen Mikroemulsionsbereiches hin zu minimalen Tensidkonzentrationen zu verstehen, an welchem sich die obere und unter Phasengrenze schneiden, die selbiges Einphasengebiet begrenzen. "Obere Phasengrenze" und "untere Phasengrenze" beschreiben dabei vorzugsweise die Übergänge zwischen Mikroemulsionsphase (einphasige Mikroemulsionen vom Winsor IV Typ) und ausgeschiedenen Exzessphasen (zweiphasige Mikroemulsionen vom Winsor I oder II Typ) oder anderen strukturierten Phasen.

Erfindungsgemäß bevorzugte Mikroemulsionen enthalten ein Tensidsystem, das einen Fischschwanzpunkt im Bereich von 0,01 Gew.-% bis 80 Gew.-%, bevorzugt 0,1 Gew.-% bis 70 Gew.-%, besonders bevorzugt 0,2 Gew.-% bis 60 Gew.-%, aufweist.

Zur Bestimmung des Fischschwanzpunktes und dieser Phasengrenzen wird ein Bezugssystem definiert. Die im folgenden beschriebene Methodik bezieht sich auf ternäre oder höhergradige Mischungen bestehend aus mindestens einer polaren Komponente, üblicherweise einem polaren Lösungsmittel, hier insbesondere Wasser, mindestens einer unpolaren Komponente, üblicherweise dem erfindungsgemäß einsetzbaren Verdickungsmittel in seiner flüssigen Form (im Folgenden immer als "ÖI" bezeichnet), und mindestens einer amphiphilen Komponente, d.h. hier dem Tensid oder Tensidsystem. Die nachfolgend beschriebenen Methoden können für jedes erfindungsgemäße Verdickungsmittel automatisiert durchgeführt werden.

In einer ersten Ausführungsform der Methodik wird der Fischschwanzpunkt als Schnittpunkt der Phasengrenzen temperaturabhängig bestimmt, wobei bei Verwendung eines Tensidsystems aus mehreren Tensiden die Mischungsverhältnisse der Tensidkomponenten konstant gehalten werden. Der Schnittpunkt beider Phasengrenzen wird jeweils isoplethal ausgehend von einem einphasigen System und hohen Tensidkonzentrationen durch Variation der Temperatur und dann stufenweiser Verdünnung mit konstantem Wasser:Öl-Verhältnis (d.h. insbesondere einem Wasser:ÖI-Massenverhältnis im Bereich von 99:1 bis 9:1, wobei das Öl der erfindungsgemäße Verdicker, insbesondere ein Triglyzerid, besonders bevorzugt hydriertes Rizinusöl, ist) und erneuter Bestimmung der Phasengrenzen durch Variation der Temperatur, insbesondere in einem Bereich von 0 bis 100°C, vorzugsweise 40 bis 98°C, noch bevorzugter 60 bis 95°C bestimmt. Dabei muss nach jeder Temperaturanpassung die Gleichgewichtseinstellung der zu untersuchenden Zusammensetzung stattfinden. Zur besseren Übersicht werden die jeweiligen Phasenübergangspunkte (Temperatur) als Funktion der Gesamtkonzentration der Tenside graphisch aufgetragen (Y-Achse: Temperatur; X-Achse: Tensidkonzentration; bei gegebenem Wasser:Öl-Verhältnis).

"Ungefähr", wie hierin in Bezug auf Zahlenwerte verwendet, bedeutet den Zahlenwert ±10%, vorzugsweise ±5%.

Die erfindungsgemäße Mikroemulsion weist bevorzugt eine Temperatur zwischen 0 bis 100°C, vorzugsweise von 40 bis 98°C, noch bevorzugter von 60 bis 95°C, auf.

Bevorzugte Mikroemulsionen sind dadurch gekennzeichnet, dass die mittlere Krümmung des amphiphilen Filmes im einphasigen Bereich der Mikroemulsion im Temperaturbereich 0 bis 100°C, vorzugsweise 40 bis 98°C, noch bevorzugter 60 bis 95°C, gleich 0 ist. Die mittlere Krümmung lässt sich mittels Leitfähigkeit innerhalb des gegebenen Einphasengebietes zumutbar bestimmen, wie beispielsweise von Strey (R. Strey Colloid Polym. Sci. 272, 1005-1019, (1994)) beschrieben.

Bevorzugte Bereiche für den Fischschwanzpunkt liegen im Bereich von 0,01 bis 80 Gew.-% Gesamttensid (X-Achse) und 0 bis 100°C (Y-Achse), weiter bevorzugt 0,1 bis 70 Gew.-% Gesamttensid und 40 bis 98°C, am bevorzugtesten 0,2 bis 60 Gew.-% Gesamttensid und 60 bis 95°C. Dabei ist das Wasser:ÖI-Massenverhältnis vorzugsweise ein konstanter Wert im Bereich von 99:1 bis 9:1, wobei das Öl vorzugsweise Triacylglyzerid, insbesondere hydriertes Rizinusöl, ist.

Zur Bestimmung wird allgemein eine Mischung aus Öl, dann Amphiphil (Tensid(e)) und dann Wasser in einem gasdicht zu verschließenden (Glas)gefäß (einschließlich eines teflonummantelten Magnetrührstäbchens) eingewogen und dann in einem thermostatisierten Wasserbad bis zur Einstellung eines thermischen Gleichgewichts gerührt. Die Temperaturwahl für den Fischschwanzpunkt erfolgt oberhalb des Schmelzpunktes des erfindungsgemäßen Verdickungsmittels, bevorzugt in einem Bereich von 0 bis 100°C, vorzugsweise 40 bis 98°C, noch bevorzugter 60 bis 95°C.

Alternativ oder ergänzend zu der oben beschriebenen temperaturabhängigen Bestimmung kann die Bestimmung des Fischschwanzpunktes bei einem Tensidsystem aus mehreren Amphiphilen (beispielsweise Tensiden) auch abhängig von der Konzentration der eingesetzten Tenside erfolgen. Dazu wird mindestens ein erstes Tensid C1, wobei dieses mindestens eine erste Tensid auch eine Mischung mehrerer Tenside sein kann, in einer Konzentration, die unter dem Fischschwanzpunkt liegt, vorgelegt und bei konstanter Temperatur und konstantem Wasser:ÖI-Verhältnis solange ein zweites Amphiphil/Tensid C2 (das von dem mindestens einen Tensid C1 unterschiedlich ist) zutitriert, bis der gesamte Phasenraum aufgeklärt ist oder die maximale erfindungsgemäß erfasste Konzentration erreicht ist. Nach der schrittweisen Zugabe von kleinen Mengen Tensid C2 wird hierbei der jeweiligen Phasenzustand nach Einstellung des Gleichgewichts dokumentiert, wobei zwischen isotropen einphasigen und mehrphasigen Zuständen unterschieden wird. Auf Basis der zugegebenen Tensidmenge von C2 kann so für jede beliebige Tensidkonzentration von C1 für jeden Phasenübergang eine Übergangskonzentration der jeweiligen Tensid, die Gesamttensidkonzentration und das relative Verhältnis der Tenside zueinander bestimmt werden. Zur besseren Übersicht werden die jeweiligen Phasenübergangspunkte (Temperatur) als Funktion der Gesamtkonzentration der Tenside graphisch aufgetragen (Y-Achse: Konzentration C2; X-Achse: Tensidkonzentration C1+C2; bei gegebenem Wasser:ÖI-Verhältnis und Temperatur). Nach Bestimmung aller Phasenübergänge für mindestens fünf Tensidkonzentrationen C1 kann so der Verlauf der Phasengrenzen beschrieben werden, wobei darauf zu achten ist, dass die initialen Tensidkonzentrationen so gewählt sind, dass der Schnittpunkt der Phasengrenzen möglichst eng beschrieben wird. In solchen Systemen aus mehreren Tensiden ist es bevorzugt, dass die HLB-Werte des Tensids/der Tenside C1 und des Amphiphils/Tensids C2 sich um einen Wert von maximal 10 unterscheiden, vorzugsweise nicht mehr als 8, noch bevorzugter nicht mehr als 5, am bevorzugtesten nicht mehr als 3.

Erfindungsgemäß bevorzugte Mikroemulsionen zeichnen sich dadurch aus, dass der Fischschwanzpunkt im Bereich von 0,01 bis 80 Gew.-% Gesamttensid (X-Achse) und 0 bis 50 Gew.-% Tensid C2 (Y-Achse), weiter bevorzugt 0,1 bis 70 Gew.-% Gesamttensid und 0,01 bis 40 Gew.-% C2, am bevorzugtesten 0,2 bis 60 Gew.-% Gesamttensid und 0,1 bis 35 Gew.-% C2. Dabei ist das Wasser:ÖI-Massenverhältnis vorzugsweise ein konstanter Wert im Bereich von 99:1 bis 9:1, wobei das Öl vorzugsweise ein Triacylglyzerid, insbesondere hydriertes Rizinusöl, ist.

Die Mikroemulsion kann als kontinuierliches Medium lipophile oder hydrophile Verdickungsmittel enthalten. In einer bikontinuierlichen Mikroemulsion sind die jeweiligen Verdicker entweder in der ölreichen Phase oder in der wasserreichen Phase lokalisiert. Es ist erfindungsgemäß bevorzugt, wenn sich der besagte Verdicker in der ölreichen Phase der Mikroemulsion befindet.

Die erfindungsgemäße Mikroemulsion ist bevorzugt dadurch gekennzeichnet, dass die flüssige Phase und die emulgierte Phase als bikontinuierliche Phasen oder als Schichten einer L_{α}-Phase, insbesondere als bikontinuierliche Phasen, vorliegen.

Eine zwingende Komponente der erfindungsgemäßen Mikroemulsion ist ein nicht-polymeres, organisches Verdickungsmittels mit einem Molekulargewicht im Bereich von 100 g/mol bis 1500 g/mol (insbesondere von 150 g/mol bis 1250 g/mol) als emulgierte Phase enthalten.

Es ist erfindungsgemäß bevorzugt, wenn das besagte Verdickungsmittel bei 1013 mbar einen Schmelzpunkt von zwischen 30°C und 100°C, insbesondere zwischen 40°C und 95°C, ganz besonders bevorzugt von 60°C bis 90°C, besitzt.

Die Gesamtmenge des besagten Verdickungsmittels beträgt bezogen auf das Gesamtgewicht der besagten Mikroemulsion 30-95 Gew.-%. Dabei ist es wiederum bevorzugt, wenn die Mindestmenge an besagtem Verdickungsmittel eine Gesamtmenge von mindestens mindestens 40 Gew.-%, ganz besonders bevorzugt mindestens 50 Gew.-%, beträgt.

Das für erfindungsgemäße Mikroemulsion bevorzugt geeignete mindestens eine niedermolekulare, organische Verdickungsmittel wird ausgewählt aus hydriertem Rizinusöl, 12-Hydroxyoktadec-9-ensäure, 12-Hydroxystearinsäure, einem Glyzerid mit mindestens zwei 12-Hydroxyoktadec-9-ensäure-Resten, Triricinolein, einem Glyzerid mit mindestens zwei 12-Hydroxystearinsäure-Resten, Tris-12-hydroxystearin, 4,6-O-Benzylidenmonosaccharid, C₈-C₂₂-Alkylamidderivate des D-Glucosamins, Harnstoffderivate, Geminitenside (insbesondere N-lauroyl-L-lysine ethyl ester) oder aus Mischungen daraus.

Ebenso eignen sich alle Fettsäuren aus Gelled Bicontinuous Microemulsions - A New Type of Orthogonal Self-Assembled Systems -von Michaela Laupheimer, Dissertation, 2013, Uni Stuttgart, als geeignete mindestens eine niedermolekulare, organische Verdickungsmittel.

Die erfindungsgemäße Mikroemulsion enthält zwingend bezogen auf das Gesamtgewicht der Mikroemulsion eine Gesamtmenge von 2,0 Gew.-% bis 60,0 Gew.-% (bevorzugt eine

Gesamtmenge von 2 Gew.-% bis 50 Gew.-%) eines Tensidsystems, enthaltend mindestens ein nichtionisches Tensid.

Geeignete nichtionische Tenside umfassen alkoxylierte Fettalkohole, alkoxylierte Oxo-Alkohole, alkoxylierte Fettsäurealkylester, Fettsäureamide, Fettsäurealkanolamide, alkoxylierte Fettsäureamide, Hydroxymischether, Sorbitanfettsäurester, Polyhydroxyfettsäureamide, Alkylphenolpolyglycolether, Aminoxide, Alkyl(poly)glycoside und Mischungen daraus.

Als nichtionische Tenside kommen insbesondere Fettalkoholalkoxylate in Betracht. In verschiedenen Ausführungsformen enthalten die Mittel daher mindestens ein nichtionisches Tensid der Formel

R¹-O-(AO)m-H,

in der
- R¹: für einen linearen oder verzweigten, substituierten oder unsubstituierten Alkylrest,
- AO: für eine Ethylenoxid- (EO) oder Propylenoxid- (PO) Gruppierung,
- m: für ganze Zahlen von 1 bis 50 stehen.

In der vorstehend genannten Formel steht R¹ für einen linearen oder verzweigten, substituierten oder unsubstituierten Alkylrest, vorzugsweise für einen linearen, unsubstituierten Alkylrest, besonders bevorzugt für einen Fettalkoholrest mit 8 bis 20 Kohlenstoffatomen. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht für eine Ethylenoxid- (EO) oder Propylenoxid- (PO) Gruppierung, vorzugsweise für eine Ethylenoxidgruppierung oder Mischungen aus Ethylenoxid- und Propylenoxideinheiten. Der Index m steht für eine ganze Zahl von 1 bis 50, vorzugsweise von 1 bis 20 und insbesondere von 2 bis 10. Ganz besonders bevorzugt steht m für die Zahlen 2, 3, 4, 5, 6, 7 oder 8.

Als nichtionisches Tensid eignet sich besonders bevorzugt mindestens ein C₈-₂₀-Alkylether, bevorzugt mindestens ein C₈₋₂₀ Fettalkoholalkoxylat mit 1 bis 10 EO und 0 bis 10 PO, enthalten ist. Weiterhin handelt es sich bei ganz besonders bevorzugt einzusetzenden Fettalkoholalkoxylaten um Verbindungen der Formel 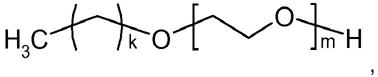 mit k = 7 bis 19, m = 2, 3, 4, 5, 6, 7, 8, 9 oder 10. Ganz besonders bevorzugte Vertreter sind C₁₂₋₁₈ Fettalkohole mit 7 EO (k = 11-17, m = 7).

Bevorzugte weitere Niotenside sind beispielsweise solche, welche alternierende Ethylenoxid(EO)- und Propylenoxid(PO)einheiten aufweisen. Unter diesen sind wiederum Tenside mit EO-PO-EO-PO-Blöcken bevorzugt, wobei jeweils eine bis zehn EO- bzw. PO-Gruppen aneinander gebunden sind, bevor ein Block aus den jeweils anderen Gruppen folgt. Hier sind nichtionische Tenside der allgemeinen Formel 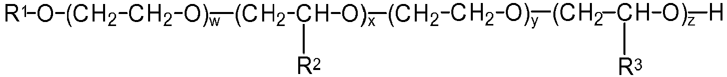 bevorzugt, in der R¹ für einen geradkettigen oder verzweigten C₆₋₂₄-Alkylrest steht; R² bzw. R³ für -CH₃ stehen und die Indizes w, x, y, z unabhängig voneinander für 0 oder ganze Zahlen von 1 bis 10 stehen, wobei mindestens eines von w und y und mindestens eines von x und z nicht 0 ist. Insbesondere sind auch nichtionische Tenside bevorzugt, die einen C₈₋₂₀-Alkylrest mit 1 bis 10 Ethylenoxideinheiten und 1 bis 10 Propylenoxideinheiten aufweisen.

Als nichtionische Tenside sind beispielsweise auch Aminoxide geeignet. Prinzipiell sind diesbezüglich alle im Stand der Technik für diese Zwecke etablierten Aminoxide, also Verbindungen, die die Formel R¹R²R³NO aufweisen, worin jedes R¹, R² und R³ unabhängig von den anderen eine gegebenenfalls substituierte, beispielsweise Hydroxy-substituierte, C₁-C₃₀ Kohlenwasserstoffkette ist, einsetzbar. Besonders bevorzugt eingesetzte Aminoxide sind solche in denen R¹ C₁₂-C₁₈ Alkyl und R² und R³ jeweils unabhängig C₁-C₄ Alkyl sind, insbesondere C₁₂-C₁₈ Alkyldimethylaminoxide. Beispielhafte Vertreter geeigneter Aminoxide sind N-Kokosalkyl-N,N-dimethylaminoxid, N-Talgalkyl-N,N-dihydroxyethylaminoxid, Myristyl-/Cetyldimethylaminoxid oder Lauryldimethylaminoxid.

Geeignete Alkyl(poly)glykoside sind beispielsweise solche der Formel R¹O-[G]ₚ, in der R¹ ein lineares oder verzweigtes Alkyl mit 12 bis 16 Kohlenstoffatomen, G ein Zuckerrest mit 5 oder 6 Kohlenstoffatomen, insbesondere Glucose, und der Index p 1 bis 10 ist.

Erfindungsgemäße besonders bevorzugte Mikroemulsionen enthalten ein Tensidsystem, das neben dem mindestens einen nichtionischen Tensid zusätzlich mindestens ein anionisches Tensid enthält. Es hat sich herausgestellt, dass durch diese Tensid-Kombination die Menge an stabil in die Mikroemulsion eingearbeiteten besagten Verdickungsmittels weiter erhöht werden kann.

Der Begriff "anionisches Tensid", wie hierin verwendet, schließt alle Tenside mit negativ geladenen funktionellen Gruppen, insbesondere Sulfat-, Sulfonat- und Carboxylatgruppen ein und umfasst beispielsweise Alkylsulfate, Olefinsulfonate, Alkansulfonate, Alkylethersulfate, Alkylbenzolsulfonate.

Als anionische Tenside werden in verschiedenen Ausführungsformen der Erfindung insbesondere Dialkylsulfosuccinate und deren Salze, vorzugsweise Alkalimetall- und Ammoniumsalze, besonders bevorzugt Natrium- und Ammoniumsalze, sowie Polyalkylenoxideinheiten-haltige Derivate davon eingesetzt. Die Alkylreste können dabei jeweils unabhängig linear oder verzweigt sein und 6 bis 22, vorzugsweise 6-12 Kohlenstoffatome enthalten. Bevorzugte Alkylreste werden unabhängig ausgewählt aus 1-Hexyl, 3,5,5-Trimethyl-1-Hexyl, Isooctyl, wie beispielsweise 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl. Derartige Tenside schließen beispielsweise solche der Formel

R¹-(OCHR³-CH₂)ₙ-O-C(O)-CH(SO₃X)-CH₂-C(O)-O-(CH₂-CHR³O)ₙ-R²

ein, wobei R¹ und R² unabhängig für lineare oder verzweigte Alkylreste mit 6 bis 22 Kohlenstoffatomen, insbesondere 6 bis 12 Kohlenstoffatomen stehen, die bevorzugt ausgewählt werden aus 1-Hexyl, 3,5,5-Trimethyl-1-Hexyl, Isooctyl, wie beispielsweise 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl;
jedes R³ unabhängig für H, CH₃ oder CH₂CH₃, insbesondere H, steht;
jedes n unabhängig für 0 oder eine ganze Zahl von 1 bis 30, vorzugsweise 0 steht;
X für ein einwertiges Kation oder den n-ten Teil eines n-wertigen Kations steht, bevorzugt sind dabei die Alkalimetallionen und darunter Na⁺ oder K⁺, wobei Na⁺ äußerst bevorzugt ist, sowie NH₄⁺, ½ Zn²⁺,½ Mg²⁺,½ Ca²⁺,½ Mn²⁺, und deren Mischungen.

Von den genannten Tensiden sind solche besonders bevorzugt, in denen R¹ und R² identisch sind und ausgewählt werden aus verzweigten Alkylresten, einschließlich aber nicht beschränkt auf 3,5,5-Trimethyl-1-Hexyl, Isooctyl, wie beispielsweise 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl, insbesondere Isooctyl wie beispielsweise 2-Ethyl-1-hexyl, 6-Methyl-1-Heptyl und 2-Methyl-1-Heptyl. In solchen Tensiden ist R³ vorzugsweise H und n ist 0. Ganz besonders bevorzugt sind Natriumbis(isooctyl)sulfosuccinate, wie beispielsweise Natriumbis(2-ethyl-1-hexyl)sulfosuccinat, Natriumbis(6-methyl-1-heptyl)sulfosuccinat und Natriumbis(2-methyl-1-heptyl)sulfosuccinat. Alternativ sind auch die korrespondieren Säuren verwendbar.

Dialkylsulfosuccinate der Formel (A-1) oder Kombinationen daraus sind ganz besonders bevorzugt, 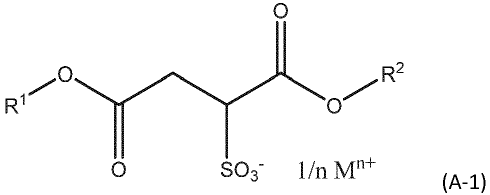 wobei die Reste R¹ und R² jeweils unabhängig voneinander linear oder verzweigt sind und 6 bis 22 Kohlenstoffatome, vorzugsweise 6 bis 12 Kohlenstoffatome, enthalten und besonders bevorzugt ausgewählt werden aus 1-Hexyl, 3,5,5-Trimethyl-1-Hexyl, 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl, und
1/n Mⁿ⁺ ein Äquivalent eines n-wertigen Kations ist.

Zusätzlich oder alternativ kann das Tensidsystem weitere anionische Tenside enthalten. In verschiedenen Ausführungsformen werden diese ausgewählt aus Alkylbenzolsulfonaten, Olefinsulfonaten, Alkansulfonaten, Alkylestersulfonate, Alk(en)ylsulfaten, Alkylethersulfaten, N-Acyltauriden, Polyethersulfonaten und Mischungen aus zwei oder mehr dieser anionischen Tenside. Weitere geeignete anionische Tenside sind Seifen, d.h. Salze von Fettsäuren, insbesondere die Na- oder K-Salze von Fettsäuren. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Als Tenside vom Sulfonat-Typ kommen dabei vorzugsweise Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch C₁₂₋₁₈-Alkansulfonate und die Ester von α-Sulfofettsäuren (Estersulfonate), zum Beispiel die α-sulfonierten Methylester der hydrierten Kokos-, Palmkern- oder Talgfettsäuren sowie Tauride und Polyethersulfonate.

Alkylbenzolsulfonate sind vorzugsweise ausgewählt aus linearen oder verzweigten Alkylbenzolsulfonaten der Formel

R-SO₃⁻ X⁺

In dieser Formel steht R für einen linearen oder verzweigten, unsubstituierten Alkylarylrest. X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X⁺ können ausgewählt sein aus NH₄⁺, ½ Zn²⁺,½ Mg²⁺,½ Ca²⁺,½ Mn²⁺, und deren Mischungen. "Alkylaryl", wie hierin verwendet, bezieht sich auf organische Reste, die aus einem Alkylrest und einem aromatischen Rest bestehen. Typische Beispiele für derartige Reste schließen ein, sind aber nicht beschränkt auf Alkylbenzolreste, wie Benzyl, Butylbenzolreste, Nonylbenzolreste, Decylbenzolreste, Undecylbenzolreste, Dodecylbenzolreste, Tridecylbenzolreste und ähnliche.

In verschiedenen Ausführungsformen sind derartige Tenside ausgewählt aus linearen oder verzweigten Alkylbenzolsulfonaten der Formel 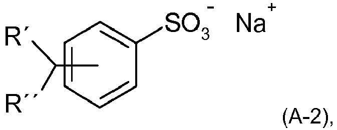 in der R' und R" zusammen 8 bis 19, vorzugsweise 8 bis 15 und insbesondere 8 bis 12 C-Atome enthalten, dargestellt. Ein ganz besonders bevorzugter Vertreter ist Natriumdodecylbenzylsulfonat.

Weitere einsetzbare anionische Tenside sind die Alkylestersulfonate, insbesondere solche der Formel

R¹⁻CH(SO₃⁻X⁺)-C(O)-O-R²

In dieser Formel steht R¹ für einen linearen oder verzweigten, substituierten oder unsubstituierten Alkylrest, vorzugsweise für einen linearen, unsubstituierten Alkylrest. Bevorzugte Reste R¹ sind ausgewählt aus Nonyl-, Decyl-, Undecyl-, Dodecyl-, Tridecyl-, Tetradecyl, Pentadecyl-, Hexadecyl-, Heptadecyl-, Octadecyl-, Nonadecyl-, Eicosyl-, Heneicosylresten und deren Mischungen, wobei die Vertreter mit ungerader Anzahl an C-Atomen bevorzugt sind. Besonders bevorzugte Reste R¹-CH sind abgeleitet von C₁₂-C₁₈-Fettsäuren, beispielsweise von Lauryl-, Myristyl-, Cetyl- oder Stearylsäure. R² steht für einen linearen oder verzweigten, substituierten oder unsubstituierten Alkylrest, vorzugsweise für einen linearen, unsubstituierten Alkylrest. Bevorzugte Reste R² sind C₁₋₆ Alkylreste, insbesondere Methyl (=Methylestersulfonate). X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X⁺ können ausgewählt sein aus NH₄⁺, ½ Zn²⁺,½ Mg²⁺,½ Ca²⁺,½ Mn²⁺, und deren Mischungen.

Ebenfalls geeignet als anionische Tenside sind die sekundären Alkansulfonate. Diese weisen beispielsweise die Formel

R¹CH(SO₃⁻X⁺) R²

auf, wobei jeweils R¹ und R² unabhängig ein lineares oder verzweigtes Alkyl mit 1 bis 20 Kohlenstoffatomen ist und mit dem Kohlenstoffatom, an das sie gebunden sind, ein lineares oder verzweigtes Alkyl bilden, vorzugsweise mit 10 bis 30 Kohlenstoffatomen, bevorzugt mit 10 bis 20 Kohlenstoffatomen und X⁺ ausgewählt ist aus der Gruppe Na⁺, K⁺, NH₄⁺, ½ Zn²⁺, ½ Mg²⁺, ½ Ca²⁺, ½ Mn²⁺ und deren Mischungen, bevorzugt Na⁺.

In verschiedenen bevorzugten Ausführungsform weist das mindestens eine sekundäre Alkansulfonat die nachstehende Formel

H₃C-(CH₂)ₙ-CH(SO₃-X⁺)-(CH₂)m-CH₃

auf, wobei m und n unabhängig voneinander eine ganze Zahl zwischen 0 und 20 sind. Vorzugsweise ist m + n eine ganze Zahl zwischen 7 und 17, bevorzugt 10 bis 14 und X⁺ ist ausgewählt aus der Gruppe Na⁺, K⁺, NH₄⁺, ½ Zn²⁺, ½ Mg²⁺, ½ Ca²⁺, ½ Mn²⁺ und deren Mischungen, bevorzugt Na⁺. In einer besonders bevorzugten Ausführungsform ist das mindestens eine sekundäre Alkansulfonat sekundäres C₁₄₋₁₇ Natriumalkansulfonat. Ein derartiges sekundäres C₁₄₋₁₇ Natriumalkansulfonat wird beispielsweise von der Firma Clariant unter dem Handelsnamen "Hostapur SAS60" vertrieben.

Geeignete Tauride sind solche der allgemeinen Formel

R-C(O)-N(CH₃)-CH₂CH₂-SO₃⁻ X⁺

wobei R ein linearer oder verzweigter, vorzugsweise ungeradzahliger, Alkylrest mit 6 bis 30, vorzugsweise 7 bis 17 Kohlenstoffatomen ist.

Weitere geeignete Aniontenside sind die in EP2203419 A1 beschriebenen Polyethersulfonate der Formel

R¹-O-(CH₂-CHR₂O)ₙCH₂-C(O)-CH₂-SO₃-X⁺

wobei R¹ für einen geradkettigen, verzweigten, gesättigten oder ungesättigten aliphatischen und/oder aromatischen Kohlenwasserstoffrest mit 6 bis 30 Kohlenstoffatomen, R² unabhängig voneinander für jede der k Alkoxyeinheiten für Wasserstoff oder einen geradkettigen, verzweigten, aliphatischen oder aromatischen Kohlenwasserstoffrest mit 1 bis 10 Kohlenstoffatomen, n für eine Zahl von 0 bis 35, und X⁺ für H⁺, Na⁺, K⁺, NH₄⁺, ½ Zn²⁺, ½ Mg²⁺, ½ Ca²⁺, ½ Mn²⁺ und deren Mischungen, bevorzugt Na⁺ steht.

Besonders bevorzugt sind Alkylethersulfate mit der Formel (A-3)

R¹-O-(AO)ₙ-SO₃⁻ X⁺ (A-3)

geeignet. In der Formel (A-3) steht R¹ für einen linearen oder verzweigten, substituierten oder unsubstituierten (C₁₀-C₂₀)-Alkylrest, vorzugsweise für einen linearen, unsubstituierten Alkylrest, besonders bevorzugt für einen Fettalkoholrest. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht gemäß Formel (A-3) für eine Ethylenoxid- (EO) oder Propylenoxid- (PO) Gruppierung, vorzugsweise für eine Ethylenoxidgruppierung. Der Index n steht gemäß Formel (A-3) für eine ganze Zahl von 1 bis 50, vorzugsweise von 1 bis 20 und insbesondere von 2 bis 10. Ganz besonders bevorzugt steht n für die Zahlen 2, 3, 4, 5, 6, 7 oder 8. X steht gemäß Formel (A-3) für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X+ können ausgewählt sein aus NH₄⁺, ½ Zn²⁺,½ Mg²⁺,½ Ca²⁺,½ Mn²⁺, und deren Mischungen Besonders bevorzugte Waschmittel enthalten ein Alkylethersulfat ausgewählt aus Fettalkoholethersulfaten der Formel 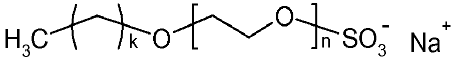 mit k = 11 bis 19, n = 2, 3, 4, 5, 6, 7 oder 8. Ganz besonders bevorzugte Vertreter sind Na-C₁₂₋₁₄ Fettalkoholethersulfate mit 2 EO (k = 11-13, n = 2 ). Der angegebenen Ethoxylierungsgrad stellt einen statistischen Mittelwert dar, der für ein spezielles Produkt eine ganze oder eine gebrochene Zahl sein kann. Die angegebenen Alkoxylierungsgrade stellen statistische Mittelwerte dar, die für ein spezielles Produkt eine ganze oder eine gebrochene Zahl sein können. Bevorzugte Alkoxylate/Ethoxylate weisen eine eingeengte Homologenverteilung auf (narrow range ethoxylates, NRE).

Als Alk(en)ylsulfate werden die Salze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxo-Alkohole und diejenigen Halbester sekundärer Alkohole dieser Kettenlängen bevorzugt. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate sind geeignete anionische Tenside. Generell einsetzbar sind demnach die Alkylsulfate der Formel

R¹⁻O-SO₃⁻ X⁺ (A-4).

In dieser Formel (A-4) steht R¹ für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R² sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₃-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen. X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X⁺ können ausgewählt sein aus NH₄⁺, ½ Zn²⁺,½ Mg²⁺,½ Ca²⁺,½ Mn²⁺, und deren Mischungen.

In verschiedenen Ausführungsformen sind diese Tenside ausgewählt aus Fettalkoholsulfaten der Formel 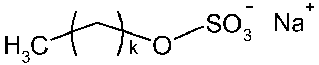 mit k = 11 bis 19. Ganz besonders bevorzugte Vertreter sind Na-C₁₂₋₁₄ Fettalkoholsulfate (k = 11-13).

Die vorstehend genannten anionischen Tenside einschließlich der Fettsäureseifen können auch als Säuren vorliegen, liegen aber vorzugsweise in Form ihrer Natrium-, Kalium- oder Magnesium- oder Ammoniumsalze vor. Besonders bevorzugt sind die Natriumsalze und/oder Ammoniumsalze. Zur Neutralisation einsetzbare Amine sind vorzugsweise Cholin, Triethylamin, Monoethanolamin, Diethanolamin, Triethanolamin, Methylethylamin oder eine Mischung daraus, wobei Monoethanolamin bevorzugt ist.

Ganz besonders bevorzugte Mikroemulsionen zeichnen sich dadurch aus, dass das mindestens eine anionische Tensid ausgewählt wird aus C₉-C₁₅-Alkylbenzolsulfonat, C₁₀-C₂₀-Alkylethersulfat, (C₆-C₂₂)-Dialkylsulfosuccinate oder Mischungen daraus. Dabei werden diese anionischen Tenside wiederum ganz besonders bevorzugt aus Tensiden der vorbeschriebenen Formeln, insbesondere die Formeln (A-1), (A-2), (A-3) und (A-4), ausgewählt.

In bevorzugten Ausführungsformen der Erfindung umfasst das Tensidsystem mindestens einen Alkylether als nichtionisches Tensid, vorzugsweise ein C₈₋₂₀ Fettalkoholalkoxylat mit 1 bis 10 EO und 0 bis 10 PO und mindestens ein Dialkylsulfosuccinat (wie oben beschrieben) als anionisches Tensid. Dabei kann das Gewichtsverhältnis von anionischem zu nichtionischem Tensid 100:1 bis 1:100, vorzugsweise 25:1 bis 1:25, in bestimmten besonders bevorzugten Ausführungsformen 1:2 bis 1:10 betragen.

Ganz besonders bevorzugt sind erfindungsgemäße Mikroemulsionen, enthaltend jeweils bezogen auf das Gesamtgewicht der Mikroemulsion
a) eine Gesamtmenge von 5 bis 20 Gew.-% Wasser als flüssige Phase,
b) eine Gesamtmenge von 40 bis 90 Gew.-% mindestens eines nicht-polymeren, organischen Verdickungsmittels mit einem Molekulargewicht im Bereich von 100 g/mol bis 1500 g/mol als emulgierte Phase und
c) ein Tensidsystem, enthaltend jeweils bezogen auf das Gewicht der Mikroemulsion jeweils eine Gesamtmenge von
   c1) 5 bis 15 Gew.-% mindestens eines ein C₈₋₂₀ Fettalkoholalkoxylat mit 1 bis 10 EO und 0 bis 10 PO als nichtionisches Tensid und
   c2) 10 bis 15 Gew.-% mindestens eines Dialkylsulfosuccinat (wie oben beschrieben) als anionisches Tensid,
   wobei das Gewichtsverhältnis von c1) und c2) in einem Gewichtsverhältnisbereich von 2 zu 1 bis 1 zu 2 liegt.

In bevorzugten Ausführungsformen umfasst das Tensidsystem einen Alkylether als nichtionisches Tensid, vorzugsweise ein C₈₋₂₀ Fettalkoholalkoxylat mit 1 bis 10 EO und 0 bis 10 PO und mindestens ein C₈-C₁₂-Alkylbenzolsulfonat als anionisches Tensid.

Mikroemulsionen in Form einer O/W-Emulsion, enthaltend jeweils bezogen auf das Gesamtgewicht der Mikroemulsion
a) eine Gesamtmenge von 5 bis 50 Gew.-%, insbesondere 5 bis 30 Gew.-%, Wasser als flüssige Phase,
b) eine Gesamtmenge von 2,5 bis 90 Gew.-%, insbesondere 20 bis 90 Gew.-% mindestens eines nicht-polymeren, organischen Verdickungsmittels mit einem Molekulargewicht im Bereich von 100 g/mol bis 1500 g/mol als emulgierte Phase und
c) ein Tensidsystem, enthaltend jeweils bezogen auf das Gewicht der Mikroemulsion jeweils eine Gesamtmenge von
   c1) 3 bis 40 Gew.-% mindestens eines ein C₈₋₂₀ Fettalkoholalkoxylat mit 1 bis 10 EO und 0 bis 10 PO als nichtionisches Tensid und
   c2) 10 bis 40 Gew.-% mindestens eines C₈-C₁₂-Alkylbenzolsulfonat als anionisches Tensid, wobei das Gewichtsverhältnis von c1) und c2) in einem Gewichtsverhältnisbereich von 15 zu 1 bis 1 zu 15 liegt. sind nicht erfindungsgemäss.

Die erfindungsgemäße Mikroemulsion enthält zwingend mindestens eine flüssige Phase. Diese flüssige Phase ist von dem Tensidsystem und dem besagten Verdickungsmittel verschieden. Bei einer bevorzugten O/W-Emulsion ist die mindestens eine flüssige Phase Wasser.

Die flüssige Phase ist in der erfindungsgemäßen Mikroemulsion bevorzugt in einer Gesamtmenge zwischen 0 und 50 Gew.-%, insbesondere von 10 bis 40 Gew.-%, enthalten.

Die erfindungsgemäßen Mikroemulsionen sind leicht zu dosieren. Sie weisen eine bevorzugte Viskosität von 10⁻¹ bis 10⁴ mPa*s auf.

Ein zweiter Erfindungsgegenstand ist ein Verfahren zur Herstellung der Mikroemulsionen des ersten Erfindungsgegenstandes. Besagte Mikroemulsionen werden durch ein Verfahren zur Herstellung einer bei einer Temperatur T1 existenten Mikroemulsion erhalten, worin
i) bezogen auf das Gewicht der Mikroemulsion eine Gesamtmenge von 10 Gew.-% bis 99,0 Gew.-% mindestens eines nicht-polymeren, organischen Verdickungsmittels mit einem Molekulargewicht von 100 g/mol bis 1500 g/mol als erste flüssige Phase mit mindestens einer Flüssigkeit als zweite flüssige Phase, mindestens einem Tensid C1 und mindestens einem nichtionischen Tensid C2 gemischt werden, so dass eine trübe Mischung entsteht, und
ii) das Gemisch auf eine Temperatur T1 gebracht und weiter durchgemengt wird,
mit der Maßgabe, dass die Temperatur T1 wenigstens so hoch wie der Schmelzpunkt mindestens eines besagten niedermolekularen Verdickungsmittels aus Schritt i) ist und eine Mikroemulsion erhalten wird.

Dazu wird mindestens ein erstes Tensid C1, wobei dieses mindestens eine erste Tensid auch eine Mischung mehrerer Tenside sein kann, in einer Konzentration, die unter dem Fischschwanzpunkt liegt, vorgelegt und bei konstanter Temperatur und konstantem Wasser:Öl-Verhältnis ein zweites Amphiphil/Tensid C2 (das von dem mindestens einen Tensid C1 unterschiedlich ist) zugegeben. Das Tensid C1 ist bevorzugt mindestens ein nichtionisches Tensid und/oder mindestens ein anionisches Tensid und das Tensid C2 ist bevorzugt mindestens ein nichtionisches Tensid Die bevorzugten Merkmale der erfindungsgemäßen Verdickungsmittel, des erfindungsgemäßen Tensidsystems und der zusätzlichen Emulsionsmerkmale (Fischschwanzpunkt, Emulsionsstruktur, etc.) des ersten Erfindungsgegenstandes gilt mutatis mutandis auch für den zweiten Erfindungsgegenstand.

Ein erfindungsgemäß bevorzugtes Verfahren ist dadurch gekennzeichnet, dass das mindestens eine Tensid C2 erst nach Schritt ii) zugemischt wird.

Die Temperatur T1 ist wenigstens so hoch wie der Schmelzpunkt mindestens eines besagten niedermolekularen Verdickungsmittels aus Schritt i). Ziel ist es die besagten Verdickungsmittel vollständig in eine flüssige Phase zu überführen. Dabei ist es entweder möglich, dass sich bei einem Verdickungsmittel-Gemisch die festförmigen Verdickungsmittel in dem mindestens einen flüssig vorliegenden Verdickungsmittel lösen. Andererseits ist es ebenso möglich, dass bei einem Gemisch von Verdickungsmittel die Temperatur T1 so gewählt wird, dass sie mindestens den Wert des höchsten Schmelzpunktes der eingesetzten Verdickungsmittel annimmt. Die Temperatur T1 des erfindungsgemäßen Verfahrens liegt bevorzugt in einem Temperaturbereich von 20 bis 100°C, bevorzugter zwischen 30°C und 100°C, vorzugsweise von 40 bis 98°C, besonders bevorzugt zwischen 40°C und 95°C, ganz besonders bevorzugt von 70°C bis 90°C, noch bevorzugter von 75 bis 95°C.

Ein dritter Erfindungsgegenstand ist eine flüssige Tensidzusammensetzung, insbesondere ein flüssiges Waschmittel, die durch Vermischen einer bezogen auf das Gesamtgewicht der flüssigen Tensidzusammensetzung eine Gesamtmenge von 0,001 Gew.-% bis 5 Gew.-% mindestens einer Mikroemulsion des ersten Erfindungsgegenstandes mit einer Zusammensetzung enthaltend Wasser und mindestens ein Tensid erhalten wird, mit den Maßgaben, dass die flüssige Tensidzusammensetzung jeweils
- eine Gesamtmenge von 5 bis 80 Gew.-% mindestens eines Tensids enthält und
- eine Fließgrenze, insbesondere von 0,001 bis 6 Pa, besonders bevorzugt von 0,1 bis 3 Pa, aufweist.

Die durch die erfindungsgemäße Mikroemulsion eingetragene Gesamtmenge an besagtem nicht-polymeren, organischem Verdickungsmittel beträgt besogen auf das Gesamtgewicht der flüssigen Tenisdzusammensetzung bevorzugt 0,001 Gew.-% bis 5,0 Gew.-%, besonders bevorzugt 0,01 Gew.-% bis 3,0 Gew.-%.

Zur Entfaltung einer Reinigungs- oder Waschleistung enthalten die erfindungsgemäßen flüssigen Tensidzusammensetzungen mindestens ein Tensid, besonders bevorzugt eine Mischung mehrerer Tenside aus unterschiedlichen Stoffklassen. Es eignen sich alle im ersten Erfindungsgegenstand genannten Tenside.

Dabei ist es für die Erfindung bevorzugt, wenn die Gesamtmenge an Tensid 5,0 bis 70 Gew.-%, bevorzugt 8,0 bis 60,0 Gew.-%, weiter bevorzugt von 10,0 bis 50,0 Gew.-%, besonders bevorzugt von 15,0 bis 45,0 Gew.-%, jeweils bezogen auf das Gesamtgewicht der flüssigen Tensidzusammensetzung, beträgt.

Als Tensid wird erfindungsgemäß bevorzugt mindestens ein anionisches Tensid eingesetzt.

Als anionische Tenside eignen sich in den erfindungsgemäßen flüssigen Tensidzusammensetzungen alle anionischen oberflächenaktiven Stoffe. Diese sind gekennzeichnet durch eine wasserlöslich machende, anionische Gruppe wie z. B. eine Carboxylat- , Sulfat-, Sulfonat- oder Phosphat-Gruppe und eine lipophile Alkylgruppe mit etwa 8 bis 30 C-Atomen. Zusätzlich können im Molekül Glykol- oder Polyglykolether-Gruppen, Ester-, Ether- und Amidgruppen sowie Hydroxylgruppen enthalten sein. Geeignete anionische Tenside liegen vorzugsweise in Form der Natrium-, Kalium- und Ammonium- sowie der Mono-, Di- und Trialkanolammoniumsalze mit 2 bis 4 C-Atomen in der Alkanolgruppe vor.

Bevorzugte erfindungsgemäße flüssige Tensidzusammensetzungen enthalten auf das Gesamtgewicht der Zusammensetzung bezogen anionisches Tensid in einer Gesamtmenge von 5,0 bis 35,0 Gew.-%, bevorzugt von 8,0 bis 30,0 Gew.-%, besonders bevorzugt von 10,0 bis 25,0 Gew.-%.

Bevorzugte anionische Tenside in den erfindungsgemäßen flüssigen Tensidzusammensetzungen sind Alkylsulfate, Alkylpolyglykolethersulfate und Alkylbenzolsulfonate, jeweils mit 10 bis 18 C-Atomen in der Alkylgruppe und bis zu 12 Glykolethergruppen im Molekül.

Bevorzugte erfindungsgemäß eingesetzte erfindungsgemäße flüssige Tensidzusammensetzungen enthalten mindestens ein Tensid der Formel (A-3)

R¹-O-(AO)ₙ-SO₃⁻ X⁺. (A-3)

In dieser Formel steht R¹ für einen linearen oder verzweigten, substituierten oder unsubstituierten Alkyl-, Aryl- oder Alkylarylrest, vorzugsweise für einen linearen, unsubstituierten Alkylrest, besonders bevorzugt für einen Fettalkoholrest. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht für eine Ethylenoxid- (EO) oder Propylenoxid- (PO) Gruppierung, vorzugsweise für eine Ethylenoxidgruppierung. Der Index n steht für eine ganze Zahl von 1 bis 50, vorzugsweise von 1 bis 20 und insbesondere von 2 bis 10. Ganz besonders bevorzugt steht n für die Zahlen 2, 3, 4, 5, 6, 7 oder 8. X steht für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X+ können ausgewählt sein aus NH₄⁺, ½ Zn²⁺,½ Mg²⁺,½ Ca²⁺,½ Mn²⁺, und deren Mischungen.

Zusammenfassend enthalten besonders bevorzugten erfindungsgemäßen flüssigen Tensidzusammensetzungen mindestens ein anionisches Tensid, ausgewählt aus Fettalkoholethersulfaten der Formel A-3a 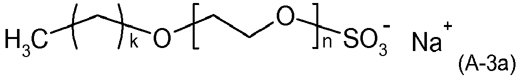 mit k = 11 bis 19, n = 2, 3, 4, 5, 6, 7 oder 8. Ganz besonders bevorzugte Vertreter sind Na-C₁₂₋₁₄ Fettalkoholethersulfate mit 2 EO (k = 11-13, n = 2 in Formel A-3a).

Bevorzugte erfindungsgemäße flüssige Tensidzusammensetzungen enthalten bezogen auf die Gesamtmenge der Zusammensetzung 1,0 bis 15 Gew.-%, vorzugsweise 2,5 bis 12,5 Gew.-%, weiter bevorzugt 5,0 bis 10,0 Gew.-% Fettalkoholethersulfat(e) (jeweils insbesondere der Formel A-3a).

Weitere bevorzugte erfindungsgemäße flüssige Tensidzusammensetzungen enthalten zusätzlich oder alternativ (insbesondere zusätzlich) mindestens ein Tensid der Formel (A-5)

R³-A-SO₃⁻ 1/n Yⁿ⁺ (A-5)

In dieser Formel steht R³ für einen linearen oder verzweigten, substituierten oder unsubstituierten Alkylrest, einen linearen oder verzweigten, substituierten oder unsubstituierten Arylrest oder einen linearen oder verzweigten, substituierten oder unsubstituierten Alkylarylrest und die Gruppierung -A- für -O- oder eine chemische Bindung. In anderen Worten lassen sich durch die vorstehende Formel Sulfat- (A = O) oder Sulfonat- (A = chemische Bindung) -tenside beschreiben. In Abhängigkeit von der Wahl der Gruppierung A sind bestimmte Reste R³ bevorzugt. Bei den Sulfattensiden (A = O) steht R³ vorzugsweise für einen linearen, unsubstituierten Alkylrest, besonders bevorzugt für einen Fettalkoholrest. Bevorzugte Reste R¹ sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.1/n Yⁿ⁺ steht für den n-ten Teil eines n-wertigen Kations, bevorzugt sind dabei die Alkalimetallionen und darunter Na⁺ oder K⁺, wobei Na⁺ äußerst bevorzugt ist. Weitere Kationen Y⁺ können ausgewählt sein aus NH₄⁺, ½ Zn²⁺,½ Mg²⁺,½ Ca²⁺,½ Mn²⁺, und deren Mischungen.

Solche Tenside sind ausgewählt aus Fettalkoholsulfaten der Formel A-5a 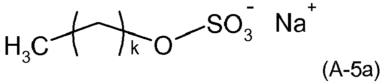 mit k = 11 bis 19. Ganz besonders bevorzugte Vertreter sind Na-C₁₂₋₁₄ Fettalkoholsulfate (k = 11-13 in Formel A-5a).

Weiter bevorzugte erfindungsgemäße flüssige Tensidzusammensetzungen enthalten bezogen auf die Gesamtmenge der Zusammensetzungen 1,0 bis 25,0 Gew.-%, vorzugsweise 2,5 bis 20,5 Gew.-%, weiter bevorzugt 5,0 bis 20,0 Gew.-% Tensid aus der Gruppe umfassend C₉₋₁₃-Alkylbenzolsulfonate, (C₈-C₂₂)-Olefinsulfonate, C₁₂₋₁₈-Alkansulfonate, (C₈-C₂₂)-Estersulfonate, (Cs-C₂₂)-Alk(en)ylsulfate, und Mischungen daraus (insbesondere der Gruppe der C₉₋₁₃-Alkylbenzolsulfonate, bevorzugt der Gruppe gemäß Formel (A-2)).

Bei den Sulfonattensiden (A = chemische Bindung), welche gegenüber den Sulfattensiden obiger Formel bevorzugt sind, steht R³ vorzugsweise für einen linearen oder verzweigten unsubstituierten Alkylarylrest. Auch hier steht X für ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X+ können ausgewählt sein aus NH₄⁺, ½ Zn²⁺,½ Mg²⁺,½ Ca²⁺,½ Mn²⁺, und deren Mischungen.

Solche äußerst bevorzugten Tenside sind ausgewählt aus linearen oder verzweigten Alkylbenzolsulfonaten der Formel A-2 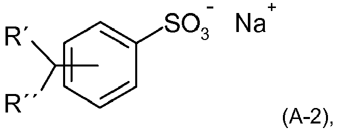 in der R' und R" zusammen 9 bis 19, vorzugsweise 11 bis 15 und insbesondere 11 bis 13 C-Atome enthalten. Ein ganz besonders bevorzugter Vertreter lässt sich durch die Formel A-2a beschreiben:

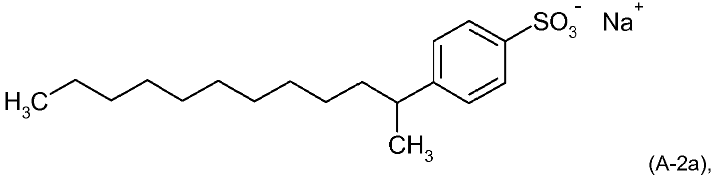

Es hat sich für die Kaltwaschleistung als vorteilhaft erwiesen, wenn die erfindungsgemäßen flüssigen Tensidzusammensetzungen als anionisches Tensid zusätzlich Seife(n) enthalten. Seifen sind die wasserlöslichen Natrium- oder Kaliumsalze der gesättigten und ungesättigten Fettsäuren mit 10 bis 20 Kohlenstoffatomen, der Harzsäuren des Kolophoniums (gelbe Harzseifen) und der Naphthensäuren, die als feste oder halbfeste Gemische in der Hauptsache für Wasch- und Reinigungszwecke verwendet werden. Natrium- oder Kaliumsalze der gesättigten und ungesättigten Fettsäuren mit 10 bis 20 Kohlenstoffatomen, insbesondere mit 12 bis 18 Kohlenstoffatomen, sind gemäß Erfindung bevorzugte Seifen. Besonders bevorzugte Zusammensetzungen sind dabei dadurch gekennzeichnet, dass sie - bezogen auf ihr Gewicht - 0,1 bis 6 Gew.-%, besonders bevorzugt 0,2 bis 4,5 Gew.-%, ganz besonders bevorzugt 0,3 bis 4,1 Gew.-% Seife(n) enthalten.

Zur verbesserten Lösung der technischen Aufgabe ist es erfindungsgemäß ganz besonders bevorzugt, eine Kombination aus
- mindestens einem Fettalkoholethersulfat der Formel A-3a 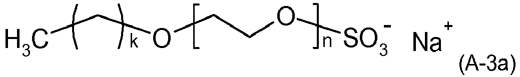 mit k = 11 bis 19, n = 2, 3, 4, 5, 6, 7 oder 8 (besonders bevorzugte Vertreter sind Na-C₁₂₋₁₄ Fettalkoholethersulfate mit 2 EO (k = 11-13, n = 2 in Formel A-3), und
- mindestens einem linearen oder verzweigten Alkylbenzolsulfonaten der Formel A-2 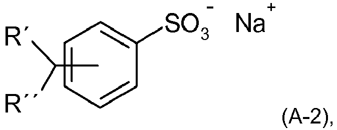 in der R' und R" zusammen 9 bis 19, vorzugsweise 11 bis 15 und insbesondere 11 bis 13 C-Atome enthalten (insbesondere der obigen Formel (A-2a)),

in den erfindungsgemäßen Tensidzusammensetzungen zu verwenden. Bevorzugte Tensidzusammensetzungen dieser Ausführungsform sind dabei optional bevorzugt dadurch gekennzeichnet, dass sie eine oder mehrere Seifen enthält (bevorzugt - bezogen auf ihr Gewicht - 0,1 bis 6 Gew.-%, besonders bevorzugt 0,2 bis 4,5 Gew.-%, ganz besonders bevorzugt 0,3 bis 4,1 Gew.-% Seife(n)).

Zusätzlich zu dem oder den anionischen Tensid(en) oder an deren Stelle enthalten die erfindungsgemäßen flüssigen Tensidzusammensetzungen bevorzugt mindestens ein nichtionisches Tensid.

Mit besonderem Vorzug enthalten die Tensidzusammensetzungen mindestens ein nichtionisches Tensid aus der Gruppe der (C₈-C₂₂)-Fettalkoholethoxylate, da diese Tenside auch bei niedrigen Waschtemperaturen leistungsstarke Zusammensetzungen ergeben und im Falle flüssiger Zubereitungen exzellente Kältestabilität aufweisen.

Demnach enthalten besonders bevorzugte flüssige Tensidzusammensetzungen zusätzlich mindestens ein nichtionisches Tensid der Formel

R²-O-(AO)ₘ-H,

in der
- R²: für einen linearen oder verzweigten, substituierten oder unsubstituierten Alkyl-, Aryl- oder Alkylarylrest,
- AO: für eine Ethylenoxid- (EO) oder Propylenoxid- (PO) Gruppierung,
- m: für ganze Zahlen von 1 bis 50 stehen.

In der vorstehend genannten Formel steht R² für einen linearen oder verzweigten, substituierten oder unsubstituierten Alkyl-, verzweigten, substituierten oder unsubstituierten Arylrest oder verzweigten, substituierten oder unsubstituierten Alkylarylrest, vorzugsweise für einen linearen, unsubstituierten Alkylrest, besonders bevorzugt für einen Fettalkoholrest. Bevorzugte Reste R² sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R² sind abgeleitet von C₁₂-C₁₈-Fettalkoholen, beispielsweise von Kokosfettalkohol, Talgfettalkohol, Lauryl-, Myristyl-, Cetyl- oder Stearylalkohol oder von C₁₀-C₂₀-Oxoalkoholen.

AO steht für eine Ethylenoxid- (EO) oder Propylenoxid- (PO) Gruppierung, vorzugsweise für eine Ethylenoxidgruppierung. Der Index m steht für eine ganze Zahl von 1 bis 50, vorzugsweise von 1 bis 20 und insbesondere von 2 bis 10. Ganz besonders bevorzugt steht m für die Zahlen 2, 3, 4, 5, 6, 7 oder 8.

Zusammenfassend sind besonders bevorzugte Tenside ausgewählt aus Fettalkoholethoxylaten der Formel A-6 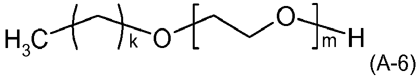 mit k = 11 bis 19, m = 2, 3, 4, 5, 6, 7 oder 8. Ganz besonders bevorzugte Vertreter sind C₁₂₋₁₈ Fettalkohole mit 7 EO (k = 11-17, m = 7 in Formel A-6).

Insbesondere bevorzugte Zusammensetzungen enthalten nichtionische Tenside in bestimmten Mengen. Äußerst bevorzugte erfindungsgemäße flüssige Tensidzusammensetzungen sind dadurch gekennzeichnet, dass die Gesamtmenge an nichtionischen Tensiden bezogen auf das Gewicht der Zusammensetzungen 1,0 bis 25 Gew.-%, vorzugsweise 2,5 bis 20,0 Gew.-%, weiter bevorzugt 5,0 bis 18,0 Gew.-%, beträgt.

Weiter bevorzugte Zusammensetzungen enthalten bezogen auf die Gesamtmenge der Zusammensetzungen 1,0 bis 25 Gew.-%, vorzugsweise 2,5 bis 20,0 Gew.-%, weiter bevorzugt 5,0 bis 18,0 Gew.-% Fettalkoholethoxylat(e) (insbesondere der Formel (A-6)).

Bevorzugte erfindungsgemäße flüssige Tensidzusammensetzungen enthalten auf das Gesamtgewicht der Zusammensetzung bezogen
- anionisches Tensid in einer Gesamtmenge von 1,0 bis 35,0 Gew.-%, bevorzugt von 5,0 bis 30,0 Gew.-%, besonders bevorzugt von 10,0 bis 25,0 Gew.-%, und
- nichtionisches Tensid in einer Gesamtmenge von 1,0 bis 25 Gew.-%, vorzugsweise 2,5 bis 20,0 Gew.-%, weiter bevorzugt 5,0 bis 18,0 Gew.-%.

Hierbei ist es wiederum bevorzugt, die bevorzugten Tenside (am bevorzugtesten in den als bevorzugt gekennzeichneten Mengen) einzusetzen. Die Menge der speziellen anionischen und nichtionischen Tenside ist in diesem Falle so zu wählen, dass die zuvor definierte Gesamtmenge an anionischem Tensid und die zuvor definierte Gesamtmenge an nichtionischem Tensid eingehalten wird.

Gemäß einer besonders bevorzugten Ausführungsform sind solche Zusammensetzungen bevorzugt, die
i) mindestens ein anionisches Tensid der Formel R¹-O-(AO)ₙ-SO₃⁻ X⁺, und
ii) mindestens ein anionisches Tensid der Formel A-2 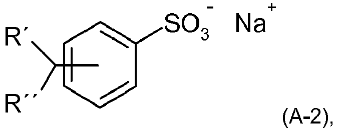 und
iii) mindestens ein nichtionisches Tensid der Formel R²-O-(AO)ₘ-H, enthalten, in denen
   - R¹: für einen linearen oder verzweigten, substituierten oder unsubstituierten Alkyl-, Aryl- oder Alkylarylrest,
   - R' und R": zusammen 9 bis 19, vorzugsweise 11 bis 15 und insbesondere 11 bis 13 C-Atome enthalten,
   - AO: unabhängig voneinander für eine Ethylenoxid- (EO) oder Propylenoxid- (PO) Gruppierung,
   - n, m: unabhängig voneinander für ganze Zahlen von 1 bis 50,
   - X: für ein einwertiges Kation oder den n-ten Teil eines n-wertigen Kations stehen.

Die Tenside i) und ii) wurden weiter oben als bevorzugte Tenside a) mit den Formeln (A-3) und (A-2a) beschrieben, das Tensid iii) als bevorzugtes Tensid mit der Formel (A-6). Bevorzugte Zusammensetzungen dieser Ausführungsform sind dabei wiederum dadurch gekennzeichnet, dass sie zusätzlich mindesten eine Seife enthalten.

Gemäß einer ganz besonders bevorzugten Ausführungsform sind solche Zusammensetzungen bevorzugt, die bezogen auf das Gewicht der Zusammensetzung
i) in einer Gesamtmenge von 1,0 bis 15 Gew.-%, vorzugsweise 2,5 bis 12,5 Gew.-%, weiter bevorzugt 5,0 bis 10,0 Gew.-% mindestens ein anionisches Tensid der Formel R¹-O-(AO)ₙ-SO₃⁻ X⁺, und
ii) in einer Gesamtmenge von 1,0 bis 25 Gew.-%, vorzugsweise 2,5 bis 20,5 Gew.-%, weiter bevorzugt 5,0 bis 20,0 Gew.-% mindestens ein anionisches Tensid der Formel A-2 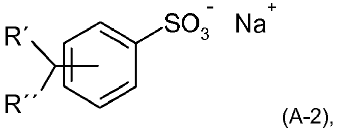 und
iii) in einer Gesamtmenge von 1,0 bis 25 Gew.-%, vorzugsweise 2,5 bis 20,0 Gew.-%, weiter bevorzugt 5,0 bis 18,0 Gew.-% mindestens ein nichtionisches Tensid der Formel R²-O-(AO)ₘ-H,
enthalten, in denen
- R¹: für einen linearen oder verzweigten, substituierten oder unsubstituierten Alkyl-, Aryl- oder Alkylarylrest,
- R' und R": zusammen 9 bis 19, vorzugsweise 11 bis 15 und insbesondere 11 bis 13 C-Atome enthalten,
- AO: unabhängig voneinander für eine Ethylenoxid- (EO) oder Propylenoxid- (PO) Gruppierung,
- n, m: unabhängig voneinander für ganze Zahlen von 1 bis 50,
- X: für ein einwertiges Kation oder den n-ten Teil eines n-wertigen Kations stehen,

Bevorzugte Tensidzusammensetzungen dieser Ausführungsform sind dabei wiederum dadurch gekennzeichnet, dass sie - bezogen auf ihr Gewicht - 0,1 bis 6 Gew.-%, besonders bevorzugt 0,2 bis 4,5 Gew.-%, ganz besonders bevorzugt 0,3 bis 4,1 Gew.-% Seife(n) enthalten.

Die erfindungsgemäße flüssige Tensidzusammensetzung kann als Lösemittel Wasser enthalten. Erfindungsgemäß bevorzugte Zusammensetzungen enthalten Wasser in einer Menge zwischen 1 bis 55 Gew.-%, insbesondere von 2 bis 50 Gew.-%, jeweils bezogen auf das Gesamtgewicht der Zusammensetzung.

Dabei ist es bevorzugt, dass flüssige Tensidzusammensetzung mehr als 5 Gew.-%, bevorzugt mehr als 15 Gew.-% und insbesondere bevorzugt mehr als 25 Gew.-%, ganz besonders bevorzugt mehr als 40 Gew.-%, jeweils bezogen auf die Gesamtmenge an Waschmittel, Wasser enthält. Dabei ist es wiederum besonders bevorzugt, wenn das Waschmittel weniger als 55 Gew.-%, bevorzugt weniger als 50 Gew.-% und insbesondere bevorzugt weniger als 45 Gew.-%, jeweils bezogen auf die Gesamtmenge an Waschmittel, Wasser enthält.

Flüssige Tensidzusammensetzungen zeichnen sich bevorzugt dadurch aus, dass das Gewichtsverhältnis der Tensidmenge der Mikroemulsion zur Gesamttensidmenge der flüssigen Tensidzusammensetzung in einem Bereich von maximal 1 zu 2, insbesondere von maximal 1:30, besonders bevorzugt von maximal 1 zu 100, beträgt.

Ganz besonders bevorzugte flüssige Tensidzusammensetzungen der vorliegenden Erfindung enthalten zusätzlich in der flüssigen Tensidzusammensetzung suspendierte Feststoffpartikel (im Folgenden auch als Partikel bezeichnet). Als solche suspendierten Feststoffpartikel sind Feststoffe zu verstehen, die sich bei 20°C nicht in der flüssigen Phase der erfindungsgemäßen Tensidzusammensetzung lösen und als separate Phase vorliegen.

Die Partikel werden bevorzugt ausgewählt aus Polymeren, Perlglanzpigmenten, Mikrokapseln, Speckles oder Mischungen daraus.

Mikrokapseln im Sinne der vorliegenden Erfindung umfassen jede dem Fachmann bekannte Art von Kapsel, insbesondere jedoch Kern-Schale-Kapseln und Matrixkapseln. Matrixkapseln sind poröse Formkörper, die eine Struktur ähnlich zu einem Schwamm aufweisen. Kern-Schale-Kapseln sind Formkörper, die einen Kern und eine Schale aufweisen. Als Mikrokapseln sind solche Kapseln geeignet, die einen mittleren Durchmesser X_{50,3} (Volumenmittel) von 0.1 bis 200 µm, bevorzugt von 1 bis 100 µm, weiter bevorzugt 5 bis 80 µm, besonders bevorzugt von 10 bis 50 µm und insbesondere von 15 bis 40 µm aufweisen. Der mittlere Teilchengrößendurchmesser X _{50,3} wird durch Siebung oder mittels eines Partikelgrößenanalysators Camsizer der Fa. Retsch bestimmt.

Die Mikrokapseln der Erfindung enthalten bevorzugt mindestens einen Wirkstoff, bevorzugt mindestens einen Riechstoff. Diese bevorzugten Mikrokapseln sind Parfummikrokapseln.

In einer bevorzugten Ausführungsform der Erfindung weisen die Mikrokapseln eine semipermeable Kapselwand (Schale) auf.

Eine semipermeable Kapselwand im Sinne der vorliegenden Erfindung ist eine Kapselwand, die halbdurchlässig ist, also kontinuierlich über die Zeit kleine Mengen des Kapselkerns freisetzt, ohne dass die Kapsel z.B. durch Reibung beschädigt bzw. geöffnet wurde. Solche Kapseln, setzen über einen längeren Zeitraum kontinuierlich kleine Mengen des in der Kapsel befindlichen Wirkstoffs, z.B. Parfum, frei.

In einer weiteren bevorzugten Ausführungsform der Erfindung weisen die Mikrokapseln eine impermeable Schale auf. Eine impermeable Schale im Sinne der vorliegenden Erfindung ist eine Kapselwand, die im Wesentlichen undurchlässig ist, also den Kapselkern erst durch Beschädigung bzw. Öffnung der Kapsel freigibt. Solche Kapseln enthalten im Kapselkern signifikante Mengen des mindestens einen Riechstoffs, so dass bei Beschädigung bzw. bei Öffnung der Kapsel ein sehr intensiver Duft bereitgestellt wird. Die so erzielten Duftintensitäten sind in der Regel so hoch, dass geringere Mengen der Mikrokapseln eingesetzt werden können um die gleiche Duftintensität zu erzielen wie bei herkömmlichen Mikrokapseln.

In einer bevorzugten Ausführungsform der Erfindung enthält die erfindungsgemäße Tensidzusammensetzung sowohl Mikrokapseln mit semipermeabler Schale, also auch Mikrokapseln mit impermeabler Schale. Durch den Einsatz von beiden Kapsel-Typen kann über den gesamten Wäschezyklus eine deutlich verbesserte Duftintensität bereitgestellt werden.

In einer weiteren bevorzugten Ausführungsform der Erfindung kann die erfindungsgemäße Zusammensetzung auch zwei oder mehr verschiedene Mikrokapseltypen mit semipermeabler oder impermeabler Schale enthalten.

Als Materialen für die Schale der Mikrokapseln kommen üblicherweise hochmolekulare Verbindungen in Frage wie zum Beispiel Eiweißverbindungen, wie zum Beispiel Gelatine, Albumin, Casein und andere, Cellulose-Derivate, wie zum Beispiel Methylcellulose, Ethylcellulose, Celluloseacetat, Cellulosenitrat, Carboxymethylcellulose und andere sowie vor allem auch synthetische Polymere wie zum Beispiel Polyamide, Polyethylenglycole, Polyurethane, Epoxydharze und andere. Bevorzugt dient als Wandmaterial, also als Schale, Melamin-Formaldehyd-Polymer, Melamin-Harnstoff-Polymer, Melamin-Harnstoff-Formaldehyd-Polymer, Polyacrylat-Polymer oder Polyacrylat-Copolymer. Erfindungsgemäße Kapseln werden beispielsweise, aber nicht ausschließlich, in US 2003/0125222 A1, DE 10 2008 051 799 A1 oder WO 01/49817 beschrieben.

Bevorzugte Melamin-Formaldehyd-Mikrokapseln werden hergestellt, in dem man Melamin-Formaldehyd-Vorkondensate und/oder deren C₁-C₄-Alkylether in Wasser, in dem die mindestens eine Geruchsmodulatorverbindung und ggf. weitere Inhaltsstoffe, wie z.B. mindestens ein Riechstoff, in Gegenwart eines Schutzkolloids kondensiert. Geeignete Schutzkolloide sind z.B. Cellulosederivate, wie Hydroxyethylcellulose, Carboxymethylcellulose und Methylcellulose, Polyvinylpyrrolidon, Copolymere des N-Vinylpyrrolidons, Polyvinylalkohole, partiell hydrolysierte Polyvinylacetate, Gelatine, Gummi arabicum, Xanthangummi, Alginate, Pectine, abgebaute Stärken, Kasein, Polyacrylsäure, Polymethacrylsäure, Copolymerisate aus Acrylsäure und Methacrylsäure, sulfonsäuregruppenhaltige wasserlösliche Polymere mit einem Gehalt an Sulfoethylacrylat, Sulfoethylmethacrylat oder Sulfopropylmethacrylat, sowie Polymerisate von N-(Sulfoethyl)-maleinimid, 2-Acrylamido-2-alkylsulfonsäuren, Styrolsulfonsäuren und Formaldehyd sowie Kondensate aus Phenolsulfonsäuren und Formaldehyd.

Es ist bevorzugt, die erfindungsgemäß verwendeten Mikrokapseln an deren Oberfläche ganz oder teilweise mit mindestens einem kationischen Polymer zu beschichten. Entsprechend eignet sich als kationisches Polymer zur Beschichtung der Mikrokapseln mindestens ein kationisches Polymer aus Polyquaternium-1, Polyquaternium-2, Polyquaternium-4, Polyquaternium-5, Polyquaternium-6, Polyquaternium-7, Polyquaternium-8, Polyquaternium-9, Polyquaternium-10, Polyquaternium-11, Polyquaternium-12, Polyquaternium-13, Polyquaternium-14, Polyquaternium-15, Polyquaternium-16, Polyquaternium-17, Polyquaternium-18, Polyquaternium-19, Polyquaternium-20, Polyquaternium-22, Polyquaternium-24, Polyquaternium-27, Polyquaternium-28, Polyquaternium-29, Polyquaternium-30, Polyquaternium-31, Polyquaternium-32, Polyquaternium-33, Polyquaternium-34, Polyquaternium-35, Polyquaternium-36, Polyquaternium-37, Polyquaternium-39, Polyquaternium-43, Polyquaternium-44, Polyquaternium-45, Polyquaternium-46, Polyquaternium-47, Polyquaternium-48, Polyquaternium-49, Polyquaternium-50, Polyquaternium-51, Polyquaternium-56, Polyquaternium-57, Polyquaternium-61, Polyquaternium-69, Polyquaternium-86. Ganz besonders bevorzugt ist Polyquaternium-7. Die im Rahmen dieser Anmeldung genutzte Polyquaternium-Nomenklatur der kationischen Polymere ist der Deklaration kationischer Polymere gemäß International Nomenclature of Cosmetic Ingredients (INCI-Deklaration) kosmetischer Rohstoffe entnommen.

Bevorzugt einsetzbare Mikrokapseln weisen mittlere Durchmesser X_{50,3} im Bereich von 1 bis 100 µm auf, vorzugsweise von 5 bis 95 µm, insbesondere von 10 bis 90 µm, zum Beispiel von 10 bis 80 µm.

Die den Kern beziehungsweise (gefüllten) Hohlraum umschließende Schale der Mikrokapseln hat bevorzugt eine durchschnittliche Dicke im Bereich von rund 5 bis 500 nm, vorzugsweise von rund 50 nm bis 200 nm, insbesondere von rund 70 nm bis etwa 180 nm.

Perlglanzpigmente sind Pigmente, die einen perlmuttartigen Glanz besitzen. Perlglanzpigmente bestehen aus dünnen Blättchen, die einen hohen Brechungsindex aufweisen und teilweise das Licht reflektieren sowie teilweise für das Licht transparent sind. Der perlmuttartige Glanz wird durch Interferenz des auf das Pigment treffenden Lichts erzeugt (Interferenzpigment). Perlglanzpigmente sind meist dünne Blättchen des oben genannten Materials, oder enthalten das o.g. Material als dünne mehrschichtige Filme oder als parallel angeordnete Bestandteile in einem geeigneten Trägermaterial.

Die erfindungsgemäß verwendbaren Perlglanzpigmente sind entweder natürliche Perlglanzpigmente wie z.B. Fischsilber (Guanin/Hypoxanthin-Mischkristalle aus Fischschuppen) oder Perlmutt (aus vermahlenen Muschelschalen), monokristalline blättchenförmige Perlglanzpigmente wie z.B. Bismutoxychlorid sowie Perglanzpigmente auf Basis von Glimmer sowie Glimmer/Metalloxid. Die letztgenannten Perlglanzpigmente sind Glimmer, die mit einem Metalloxidcoating versehen wurden.

Durch den Einsatz der Perlglanzpigmente in der erfindungsgemäßen Suspension werden Glanz und gegebenenfalls zusätzlich Farbeffekte erzielt.

Perlglanzpigmente auf Glimmer-Basis und auf Glimmer/Metalloxid-Basis sind erfindungsgemäß bevorzugt. Glimmer gehören zu den Schicht-Silicaten. Die wichtigsten Vertreter dieser Silicate sind Muscovit, Phlogopit, Paragonit, Biotit, Lepidolith und Margarit. Zur Herstellung der Perlglanzpigmente in Verbindung mit Metalloxiden wird der Glimmer, überwiegend Muscovit oder Phlogopit, mit einem Metalloxid beschichtet. Geeignete Metalloxide sind u.a. TiO₂, Cr₂O₃ und Fe₂O₃. Durch entsprechende Beschichtung werden Interferenzpigmente sowie Farbglanzpigmente als erfindungsgemäße Perlglanzpigmente erhalten. Diese Perlglanzpigmentarten weisen neben einem glitzernden optischen Effekt zusätzlich Farbeffekte auf. Desweiteren können die erfindungsgemäß verwendbaren Perlglanzpigmente weiterhin ein Farbpigment enthalten, welches sich nicht von einem Metalloxid ableitet.

Die Korngröße der bevorzugt verwendeten Perlglanzpigmente liegt bevorzugt bei einem mittleren Durchmesser X_{50,3} (Volumenmittel) zwischen 1.0 und 100 µm, besonders bevorzugt zwischen 10.0 und 60.0 µm.

Unter Speckles sind im Sinne der Erfindung Makropartikel, insbesondere Makrokapseln, zu verstehen, die einen mittleren Durchmesser X_{50,3} (Volumenmittel) von mehr als 300 µm, insbesondere von 300 bis 1500 µm, bevorzugt von 400 bis 1000 µm, aufweisen.

Bei Speckles handelt es sich bevorzugt um Matrixkapseln. Die Matrix ist bevorzugt gefärbt. Die Matrixbildung erfolgt beispielsweise über Gelierung, Polyanion-Polykation-Wechselwirkungen oder Polyelektrolyt-Metallion-Wechselwirkungen und ist im Stand der Technik genauso wie die Herstellung von Partikeln mit diesen matrix-bildenden Materialien wohl bekannt. Ein beispielhaftes matrix-bildendes Material ist Alginat. Zur Herstellung Alginat-basierter Speckles wird eine wässrige Alginat-Lösung, welche ggf zusätzlich den einzuschließenden Wirkstoff bzw. die einzuschließenden Wirkstoffe enthält, vertropft und anschließend in einem Ca²⁺-Ionen oder Al³⁺-Ionen enthaltendem Fällbad ausgehärtet. Alternativ können anstelle von Alginat andere, matrixbildende Materialien eingesetzt werden.

Die erfindungsgemäße flüssige Tensidzusammensetzung kann zusätzlich weitere Inhaltsstoffe enthalten, die die anwendungstechnischen und/oder ästhetischen Eigenschaften der Zusammensetzung abhängig von dem beabsichtigten Verwendungszweck weiter verbessern.

Die erfindungsgemäßen flüssigen Tensidzusammensetzungen enthalten bevorzugt mindestens ein Enzym. Das Enzym kann ein hydrolytisches Enzym oder ein anderes Enzym in einer für die Wirksamkeit des Mittels zweckmäßigen Konzentration sein. Eine bevorzugte Ausführungsform der Erfindung stellen somit flüssigen Tensidzusammensetzungen dar, die ein oder mehrere Enzyme umfassen. Als Enzyme bevorzugt einsetzbar sind alle Enzyme, die in dem erfindungsgemäßen Mittel eine katalytische Aktivität entfalten können, insbesondere eine Protease, Amylase, Cellulase, Hemicellulase, Mannanase, Tannase, Xylanase, Xanthanase, Xyloglucanase, ß-Glucosidase, Pektinase, Carrageenase, Perhydrolase, Oxidase, Oxidoreduktase oder eine Lipase, sowie deren Gemische. Enzyme sind in dem Mittel vorteilhafterweise jeweils in einer Menge von 1 × 10⁻⁸ bis 5 Gew.-% bezogen auf aktives Protein und das Gesamtgewicht der Zusammensetzung enthalten. Zunehmend bevorzugt ist jedes Enzym in einer Menge von 1 × 10⁻⁷-3 Gew.-%, von 0,00001-1 Gew.-%, von 0,00005-0,5 Gew.-%, von 0,0001 bis 0,1 Gew.-% und besonders bevorzugt von 0,0001 bis 0,05 Gew.-% in erfindungsgemäßen flüssigen Tensidzusammensetzungen enthalten, bezogen auf aktives Protein. Besonders bevorzugt zeigen die Enzyme synergistische Reinigungsleistungen gegenüber bestimmten Anschmutzungen oder Flecken, d.h. die in der Mittelzusammensetzung enthaltenen Enzyme unterstützen sich in ihrer Reinigungsleistung gegenseitig. Synergistische Effekte können nicht nur zwischen verschiedenen Enzymen, sondern auch zwischen einem oder mehreren Enzymen und weiteren Inhaltsstoffen des erfindungsgemäßen Mittels auftreten.

Bei der/den Amylase(n) handelt es sich vorzugsweise um eine α-Amylase. Bei der Hemicellulase handelt es sich vorzugsweise um eine Pektinase, eine Pullulanase und/oder eine Mannanase. Bei der Cellulase handelt es sich vorzugsweise um ein Cellulase-Gemisch oder eine Einkomponenten-Cellulase, vorzugsweise bzw. überwiegend um eine Endoglucanase und/oder eine Cellobiohydrolase. Bei der Oxidoreduktase handelt es sich vorzugsweise um eine Oxidase, insbesondere eine Cholin-Oxidase, oder um eine Perhydrolase.

Die eingesetzten Proteasen sind vorzugsweise alkalische Serin-Proteasen. Sie wirken als unspezifische Endopeptidasen, das heißt, sie hydrolysieren beliebige Säureamidbindungen, die im Inneren von Peptiden oder Proteinen liegen und bewirken dadurch den Abbau proteinhaltiger Anschmutzungen auf dem Reinigungsgut. Ihr pH-Optimum liegt meist im deutlich alkalischen Bereich. In bevorzugten Ausführungsformen umfasst das im erfindungsgemäßen Mittel enthaltene Enzym eine Protease.

Die vorliegend eingesetzten Enzyme können natürlicherweise vorkommende Enzyme sein oder Enzyme, die auf Basis natürlich vorkommender Enzyme durch eine oder mehrere Mutationen verändert wurden, um gewünschte Eigenschaften, wie katalytische Aktivität, Stabilität oder desinfizierende Leistung, positiv zu beeinflussen.

Die Proteinkonzentration kann mit Hilfe bekannter Methoden, zum Beispiel dem BCA-Verfahren (Bicinchoninsäure; 2,2'-Bichinolyl-4,4'-dicarbonsäure) oder dem Biuret-Verfahren bestimmt werden. Die Bestimmung der Aktivproteinkonzentration erfolgt diesbezüglich über eine Titration der aktiven Zentren unter Verwendung eines geeigneten irreversiblen Inhibitors (für Proteasen beispielsweise Phenylmethylsulfonylfluorid (PMSF)) und Bestimmung der Restaktivität (vgl. M. Bender et al., J. Am. Chem. Soc. 88, 24 (1966), S. 5890-5913).

In den hierin beschriebenen flüssigen Tensidzusammensetzungen können die einzusetzenden Enzyme ferner zusammen mit Begleitstoffen, etwa aus der Fermentation, konfektioniert sein. In den beschriebenen Formulierungen werden die Enzyme bevorzugt als Enzymflüssigformulierung(en) eingesetzt.

Die Enzyme werden in der Regel nicht in Form des reinen Proteins, sondern vielmehr in Form stabilisierter, lager- und transportfähiger Zubereitungen bereitgestellt. Zu diesen vorkonfektionierten Zubereitungen zählen beispielsweise Lösungen der Enzyme, vorteilhafterweise möglichst konzentriert, wasserarm und/oder mit Stabilisatoren oder weiteren Hilfsmitteln versetzt.

Die erfindungsgemäßen flüssigen Tensidzusammensetzungen können weiterhin enthalten:
- Optional Öle. Unter Ölen sollen hier im Wesentlichen mit Wasser unmischbare Öle verstanden werden. Sie dienen insbesondere zur Anlösung fettiger Anschmutzungen. Es können Alkane eingesetzt werden, bevorzugt sind biologisch abbaubare Öle mit Ether- oder Estergruppen. Auch ist der Einsatz von Terpenen möglich. Bevorzugte Öle sind Dialkylether, mit 6 bis 20 Kohlenstoffatomen in den Alkylresten, insbesondere Dioctylether. Übliche Parfümöle, die mit dem Ziel der Beduftung der Wäsche zugesetzt werden, sollen hier nicht als Ölkomponente im Sinne der Erfindung gewertet werden. In Konzentraten können derartige Öle in Mengen bis zu 60 Gew.-% eingesetzt werden. In bevorzugten Ausführungsformen der Erfindung sind die Zusammensetzungen aber frei von derartigen Ölen.
- Optional Salze. Anorganische Salze sind nicht zwingend erforderlich, um die Mikroemulsionen herstellen zu können. Allerdings sind Konzentrate, insbesondere aniontensidhaltige Konzentrate bevorzugt, welche ein oder mehrere anorganische Salze enthalten. Bevorzugte anorganische Salze sind dabei Alkalimetallsulfate und Alkalimetallhalogenide, insbesondere -chloride, sowie Alkalimetallcarbonate. Ganz besonders bevorzugte anorganische Salze sind Natriumsulfat, Natriumhydrogensulfat, Natriumcarbonat, Natriumhydogencarbonat, Natriumchlorid, Kaliumchlorid und Mischungen aus diesen. Der Gehalt von Zusammensetzungen in Konzentratform an einem oder mehreren anorganischen Salzen beträgt vorzugsweise 20 bis 70 Gew.-%. In den Mikroemulsionen beträgt der Gehalt an einem oder mehreren anorganischen Salzen 0 bis 20 Gew.-% und vorzugsweise 0,01 bis 5 Gew.-%, wobei sich Konzentrationen von 0,1 bis 1 Gew.-% als besonders bevorzugt herausgestellt haben.
- Weitere übliche Waschmittelinhaltsstoffe, allen voran Bleichmittel, Buildersubstanzen, Komplexbildner, wasserlösliche Lösungsmittel, optische Aufheller, Duftstoffe, Stabilisatoren, Rheologiemodifizierer, Farbstoffe etc.

Die erfindungsgemäße flüssige Tensidzusammensetzung kann als weitere übliche Waschmittelinhaltsstoffe zusätzlich zu den oben genannten mindestens eine, vorzugsweise zwei oder mehr aus der folgenden Gruppe ausgewählte weitere Bestandteile enthalten: Gerüststoffe, Bleichmittel, Elektrolyte, nichtwässerige, aber mit Wasser mischbare Lösungsmittel, pH-Stellmittel, Parfüme, Parfümträger, Fluoreszenzmittel, Farbstoffe, Hydrotrope, Schauminhibitoren, Silikonöle, Antiredepositionsmittel, Vergrauungsinhibitoren, Einlaufverhinderer, Knitterschutzmittel, Farbübertragungsinhibitoren, antimikrobielle Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, weichmachende Komponenten sowie UV-Absorber.

Als Gerüststoffe, die in der Waschmittelzusammensetzung enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Organische Gerüststoffe, welche in der Waschmittelzusammensetzung vorhanden sein können, sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen. Ebenfalls geeignet sind Aminopolycarbonsäuren, wie insbesondere Glutamindiessigsäure (GLDA) und Methylglycindiessigsäure (MGDA) sowie deren Salze.

Als Gerüststoffe sind weiter polymere Polycarboxylate geeignet. Dies sind beispielsweise die Alkalimetallsalze der Polyacrylsäure oder der Polymethacrylsäure, zum Beispiel solche mit einer relativen Molekülmasse von 600 bis 750.000 g / mol. Geeignete Polymere sind insbesondere Polyacrylate, die bevorzugt eine Molekülmasse von 1.000 bis 15.000 g / mol aufweisen. Aufgrund ihrer überlegenen Löslichkeit können aus dieser Gruppe wiederum die kurzkettigen Polyacrylate, die Molmassen von 1.000 bis 10.000 g / mol, und besonders bevorzugt von 1.000 bis 5.000 g / mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere auch Allylsulfonsäuren, wie Allyloxybenzolsulfonsäure und Methallylsulfonsäure, als Monomer enthalten.

In den flüssigen Waschmitteln werden aber bevorzugt lösliche Gerüststoffe, wie beispielsweise Citronensäure, oder Acrylpolymere mit einer Molmasse von 1.000 bis 5.000 g / mol eingesetzt.

Der erfindungsgemäßen flüssigen Tensidzusammensetzung können nichtwässerige Lösungsmittel zugesetzt werden, die mit Wasser mischbar sind. Geeignete nichtwässrige Lösungsmittel umfassen ein- oder mehrwertige Alkohole, Alkanolamine oder Glykolether. Beispielsweise werden die Lösungsmittel ausgewählt aus Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropylenglykolmonoethylether, Methoxytriglykol, Ethoxytriglykol, Butoxytriglykol, 1-Butoxyethoxy-2-propanol, 3-Methyl-3-methoxybutanol sowie Mischungen dieser Lösungsmittel.

Die erfindungsgemäßen flüssigen Tensidzusammensetzungen können in verschiedenen Ausführungsformen auch in Form von Einmalportionen formuliert werden. Hierzu zählen insbesondere Behälter aus wasserlöslichen Materialien, welche mit den erfindungsgemäßen Konzentraten befüllt sind. Besonders bevorzugt sind Einkammer- oder Mehrkammerbehälter, vor allem aus Polyvinylalkohol oder Polyvinylalkoholderivaten oder Copolymeren mit Vinylalkohol oder Vinylalkohol-Derivaten als Monomer. Diese Einmalportionen stellen sicher, dass die für die Erstellung des Mikroemulsionssystems und für die damit verbundene entsprechende Leistung richtige Menge des erfindungsgemäßen Konzentrats in dem ersten Unterwaschzyklus zum Einsatz gelangt. Gegebenenfalls können in Abhängigkeit von der Menge des zu waschenden Textils oder Wäschepostens auch mehrere Einmalportionen zum Einsatz kommen.

Ein vierter Erfindungsgegenstand ist ein Verfahren zur Herstellung einer flüssigen Tensidzusammensetzung, insbesondere eines Waschmittels, wobei
a) auf eine Temperatur T2 erwärmte Stoffe vermischt werden mit einer Mikroemulsion des ersten Erfindungsgegenstandes bei einer Temperatur T3 und
b) anschließend die Mischung auf eine Temperatur T4 abgekühlt wird,
wobei die Temperaturen T2 und T3 wenigstens so hoch wie der Schmelzpunkt mindestens eines besagten nicht-polymeren, organischen Verdickungsmittels der Mikroemulsion sind und die Temperatur T4 unter dem Schmelzpunkt der besagten nicht-polymeren, organischen Verdickungsmittel liegt.

Durch dieses Herstellungsverfahren wird eine flüssige Tensidzusammensetzung des dritten Erfindungsgegestandes erhalten.

Die bevorzugten Merkmale des ersten Erfindungsgegenstandes (z.B. erfindungsgemäßen Verdickungsmittel, des erfindungsgemäßen Tensidsystems und der zusätzlichen Emulsionsmerkmale (Fischschwanzpunkt, Emulsionsstruktur, etc.) gelten mutatis mutandis auch für den vierten Erfindungsgegenstand.

Ein bevorzugtes Verfahren zur Herstellung einer flüssigen Tensidzusammensetzung, zeichnet sich dadurch aus, dass mindestens ein besagtes, nicht-polymeres, organisches Verdickungsmittel der Mikroemulsion bei 1013 mbar einen Schmelzpunkt von maximal 90°C, bevorzugt von maximal 85°C, besonders bevorzugt von maximal 80°C, besitzt. Es ist erfindungsgemäß bevorzugt, wenn das besagte Verdickungsmittel einen Schmelzpunkt von zwischen 30°C und 100°C, insbesondere zwischen 40°C und 95°C, ganz besonders bevorzugt von 60°C bis 90°C, besitzt.

Ein bevorzugtes Verfahren zur Herstellung einer flüssigen Tensidzusammensetzung, ist dadurch gekennzeichnet, dass die auf Temperatur T2 erwärmten Stoffe Wasser, mindestens ein Tensid oder Mischungen davon enthalten. Dabei ist es wiederum bevorzugt, wenn pures Wasser nicht als erster Stoff mit der besagten Mikroemulsion vermischt wird. Falls Wasser doch als erster Stoff zugemischt werden soll, dann nur in einer definierten Menge, so dass in der Mischung die erfindungsgemäße Mikroemulsion zunächst erhalten bleibt. Besonders bevorzugt werden zunächst Tenside als Stoff mit der besagten Mikroemulsion vermischt und dann Wasser, oder eine Mischung aus Tensid und bezogen auf das Gewicht dieser Mischung Wasser in einer Menge von maximal 50 Gew.-%.

Die in dem Verfahren zur Herstellung einer flüssigen Tensidzusammensetzung eingesetzte Mikroemulsion wurde bevorzugt nach einem Verfahren des zweiten Erfindungsgegenstandes hergestellt.

Bevorzugterweise wird in einem Verfahren zur Herstellung einer flüssigen Tensidzusammensetzung vor Schritt a) die Mikroemulsion durch ein Verfahren des zweiten Erfindungsgegenstandes hergestellt und die auf diese Weise hergestellte, nach wie vor auf Temperatur T1 temperierte Mikroemulsion auf eine Temperatur T3 gebracht, mit der Maßgabe, dass
- Temperatur T1 ≥ Temperatur T3 ist,
- T3 wenigstens so hoch wie der Schmelzpunkt mindestens eines besagten nicht-polymeren, organischen Verdickungsmittels der Mikroemulsion ist,
- und die erhaltene Mikroemulsion mit der Temperatur T3 in Schritt a) des Verfahrens eingebracht wird.

Im Rahmen einer wiederum bevorzugten Ausführungsform ist T3 wenigstens so hoch wie der höchste Schmelzpunkt der eingesetzten besagten nicht-polymeren, organischen Verdickungsmittel der Mikroemulsion.

Die Abkühlung der Mischung auf Temperatur T4 erfolgt bevorzugt graduell. Die Temperatur T4 liegt bevorzugt mindestens 10 K unter dem niedrigsten Schmelzpunkt der eingesetzten erfindungsgemäßen Verdickungsmittel. Temperatur T4 beträgt bevorzugt höchstens 40°C, insbesondere höchstens 30°C, ganz besonders bevorzugt Raumtemperatur.

Der Kühlprozess kann bevorzugt durch zumischen von Wasser mit einer Temperatur < T4 erfolgen. In dem zur Abkühlung genutzen Wasser können auch noch weitere Inhaltsstoffe der erfindungsgemäßen Tensidzusammensetzungen enthalten sein.

Partikelförmige Feststoffe werden bevorzugt während des Abkühlens oder nach dem Abkühlen auf die Temperatur T4 dazu gemischt und suspendiert.

Zudem können auch Additive nach dem Abkühlen auf T4 zugemischt werden.

### Beispiele

Hestellung der erfindungsgemäßen Mikroemulsion (Mikroemulsionspremix 1):
Eine erfindungsgemäße Mikroemulsion wurde nach folgender Methode hergestellt:
0.45g Hydrogenated Castor Oil (HCO) wurde mit 0.134g Dioctyl sulfosuccinat Natriumsalz (AOT - AS: 97%) und 0.15g aAlkyl Polyglycol ether (Marlox RT 42 - AS: 100%, Fa. Sasol) in 0.045g H2O gemischt und bei 90°C aufgeschmolzen unter Erhalt einer ersten transparenten Mikroemulsion.

Die so erhaltene, nicht abgekühlte Mikroemulsion wird zur Herstellung der flüssigen Tensidzusammensetzungen der Beispiele 1 bis 3 eingesetzt.

### Beispiel 1:

Allgemeine Beschreibung der Mischung von Mikroemulsionspremix mit Flüssigwaschmittelmatrix:
Eine definierte Menge des erfindungsgemäßen Mikroemulsionspremix wird auf die gewünschte Herstellungtemperatur erwärmt (s. Beispiel 3). Die Menge wird so ausgewählt, sodass in der fertigen Mischung eine gewünschte Menge HCO vorhanden ist. Bei der Herstellungstemperatur werden schrittweise die Komponenten der Flüssigwaschmittelmatrix dem Mikroemulsionspremix hinzugefügt. Bevorzugt werden die amphiphilen Komponenten (Tenside) zuerst dazugegeben und homogenisiert. Dabei können diese amphiphilen Komponenten entweder als Stammlösung mit Wasser oder pur verwendet werden. Die Mischung wird weiterhin homogenisiert und auf der gewünschten Temperatur gehalten. Dabei erfolgt auch die pH Einstellung. Anschließend wird die Mischung graduell abgekühlt auf Raumtemperatur mit anschließender Zugabe von temperatursensitiven Komponenten (Enzyme, Parfüm, Pigment). Die Abkühlung bewirkt dabei keine Verschiebung des vorher eingestellten pH Wertes. Der Herstellungsprozess funktioniert mindestens genauso gut, sogar besser, wenn man die amphiphilen Komponenten der Flüssigwaschmittelmatrix auf die gewünschte Herstellungstemperatur bringt und gewünschten Mengen der erfindungsgemäßen Mikroemulsionspremices damit homogen vermischt. Bei der Homogenisierung der amphiphilen Komponenten der Flüssigwaschmittelmatrix mit den erfindungsgemäßen Mikroemulsionspremices ist bevorzugt darauf zu achten, dass die gewünschte Herstellungstemperatur konstant eingehalten wird.

**Tabelle 1: Flüssige Tensidzusammensetzung**

| Chemischer Name | % Activsubstanz in der Formel |
|---|---|
| Stabilisator | 1,06 |
| Zitronensäure | 2,34 |
| Antischaum Additiv | 0,04 |
| C12-18-Fettalokoholethersulfat mit 2 EO | 7,42 |
| C12-18-Fettalkohol mit 7 EO | 5,82 |
| C10-13-Alkylbenzolsulfonsäure | 5,82 |
| NaOH | 2,47 |
| Glycerin | 2,66 |
| Komplexbilder | 0,53 |
| Konservierungsmittel | 0,06 |
| Ethanol | 1,32 |
| aus Mikroemulsion 1 (Premix): | |
| Hydrogeniertes Kastorö(HCO)l | 0,90 |
| Dioctyl Natrium Sulfosuccinat | 0,26 |
| Alkylpolyglycolether* | 0,30 |
| Temperaturempfindliche Komponenten: | |
| Enzyme | 0,90 |
| Parfum | 0,78 |
| Pigment | 0,001 |
| Wasser, ad. 100% | |

| | |
|---|---|
| * Aktivsubstanz aus dem Rohstoff Marlox RT 42^{®} (Sasol). | |

Diese Formulierung ist stabil und zeigt keine Anzeichen einer Instabilität. Die resultierende Fließgrenze von dieser mit Premixmikroemulsion versetzten Flüssigwaschmittelmatrix liegt bei 0,3 Pa. Sichtbare Beads können im Bulk suspendiert und gleichmäßig verteilt werden. Eine analoge Formulierung ohne HCO ist instabil (eine Flüssigphasenseparation ist zu beobachten), weist keine Fließgrenze auf (0,0 Pa) Die Beads sinken ab und akkumulieren am Boden der Flasche.

Dieselbe Formulierung versetzt mit den HCO-haltigen Premices aus EP 1 502 646 B1 und WO 2015/200062 A1 zeigen keine der oben beschriebenen Resultate. Das auskristallisierte HCO befinde sich hier in einem ungelösten Zustand im Bulk in Form eines oder mehreren weißer, fester Klumpen als größere Agglomerate am Boden. Fließgrenze ist nicht vorhanden (0,0 Pa). Die sichtbaren Beads sinker zu Boden der Flasche und akkumulieren dort.

### Beispiel 2:

**Tabelle 2: Erfindungsgemäße flüssige Tensidzusammensetzung**

| Chemischer Name | % Activsubstanz in der Formel |
|---|---|
| Stabilisator | 1,12 |
| Zitronensäure | 3,58 |
| Antischaum Additiv | 0,05 |
| C12-18-Fettalokoholethersulfat mit 2 EO | 10,07 |
| C12-18-Fettalkohol mit 7 EO | 7,84 |
| C10-13-Alkylbenzolsulfonsäure | 7,84 |
| NaOH | 3,47 |
| 1,2-Propandiol | 6,38 |
| Komplexbilder | 0,78 |
| Texcare SRN 170 | 1,46 |
| Ethanol | 2,24 |
| aus Mikroemulsion 1 (Premix): | |
| Hydrogeniertes Kastoröl (HCO) | 0,90 |
| Dioctyl Natrium Sulfosuccinat | 0,26 |
| Alkylpolyglycolether* | 0,30 |
| Temperaturempfindliche Komponenten | |
| Optischer Aufheller | 0,11 |
| Enzyme | 1,86 |
| Parfum | 1,01 |
| Pigment | 0,01 |
| Wasser, ad. 100% | |

| | |
|---|---|
| * Aktivsubstanz aus dem Rohstoff Marlox RT 42^{®} (Sasol). | |

Diese Formulierung ist stabil und zeigt keine Anzeichen einer Instabilität. Resultierende Fließgrenze von dieser mit Premixmikroemulsion versetzten Flüssigwaschmittelmatrix liegt bei 1,7 Pa. Sichtbare Beads können im Bulk suspendiert und gleichmäßig verteilt werden. Eine analoge Formulierung ohne HCO ist instabil (eine Flüssigphasenseparation ist zu beobachten), weist keine Fließgrenze auf (0,0 Pa). Die Beads sinken ab und akkumulieren am Boden der Flasche.

Dieselbe Formulierung versetzt mit den HCO-haltigen Premices aus EP 1 502 646 B1 und WO 2015/200062 A1 zeigten keine der oben beschriebenen Resultate. Das auskristallisierte HCO befindet sich in einem ungelösten Zustand im Bulk in Form eines oder mehreren weißer, fester Klumpen als größere Agglomerate am boden. Eine Fließgrenze ist nicht vorhanden (0,0 Pa). Die sichtbaren Beads sinken zu Boden der Flasche und akkumulieren dort.

### Beispiel 3:

**Tabelle 3: Korrelation zwischen Herstellungstemperatur und resultierenden Fließgrenze basierend auf Ergebnissen erhalten vom Beispiel 1.**

| Herstellungstemperatur [°C] | Resultierende Fließgrenze [Pa] |
|---|---|
| 90 | 0,82 |
| 80 | 0,90 |
| 75 | 1,30 |

Der Einsatz erfindungsgemäßer Premixe führt stets zu einer Ausbildung einer Fließgrenze. Diese Ergebnisse zeigen eine Abhängigkeit zwischen der Herstellungstemperatur während des Herstellungsprozesses der Flüssigwaschmittelformulierung und der Intensität der resultierenden Fließgrenzen. Auf diese Weise lassen sich die Werte der Fließgrenzen der Flüssigwaschmittel gezielt einstellen.

## Patentansprüche

1. Mikroemulsion, enthaltend jeweils bezogen auf das Gesamtgewicht der Emulsion
a) eine flüssige Phase,
b) eine Gesamtmenge von 30,0 Gew.-% bis 95,0 Gew.-% mindestens eines nicht-polymeren, organischen Verdickungsmittels mit einem Molekulargewicht im Bereich von 100 g/mol bis 1500 g/mol als emulgierte Phase,
c) eine Gesamtmenge von 2,0 Gew.-% bis 60,0 Gew.-% eines Tensidsystems, enthaltend mindestens ein nichtionisches Tensid.

2. Mikroemulsion nach Anspruch 1, **dadurch gekennzeichnet, dass** sich der besagte Verdicker in der ölreichen Phase der Mikroemulsion befindet.

3. Mikroemulsion nach Anspruch 1 oder 2, **dadurch gekennzeichnet, dass** die flüssige Phase und die emulgierte Phase als bikontinuierliche Phasen oder als Schichten einer L_{α}-Phase, insbesondere als bikontinuierliche Phasen, vorliegen.

4. Mikroemulsion nach einem der vorhergehenden Ansprüche, **dadurch gekennzeichnet, dass** das Tensidsystem einen Fischschwanzpunkt im Bereich von 0,01 Gew.-% bis 80 Gew.-%, bevorzugt 0,1 Gew.-% bis 70 Gew.-%, besonders bevorzugt 0,2 Gew.-% bis 60 Gew.-%, aufweist.

5. Mikroemulsion nach einem der vorhergehenden Ansprüche, **dadurch gekennzeichnet, dass** der Fischschwanzpunkt im Bereich von 0,01 bis 80 Gew.-% Gesamttensid und 0,01 bis 50 Gew.-% Tensid C2, bevorzugt 0,1 bis 70 Gew.-% Gesamttensid und 0,01 bis 40 Gew.-% Tensid C2, am bevorzugtesten 0,2 bis 60 Gew.-% Gesamttensid und 0,1 bis 35 Gew.-% Tensid C2 liegt.

6. Mikroemulsion nach einem der vorhergehenden Ansprüche, **dadurch gekennzeichnet, dass** die mittlere Krümmung des amphiphilen Filmes im einphasigen Bereich der Mikroemulsion im Temperaturbereich 0 bis 100°C, vorzugsweise 40 bis 98°C, noch bevorzugter 60 bis 95°C, gleich 0 ist.

7. Mikroemulsion nach einem der vorhergehenden Ansprüche, **dadurch gekennzeichnet, dass** die Gesamtmenge an besagtem Verdickungsmittel mindestens 40 Gew.-% beträgt.

8. Mikroemulsion, nach einem der vorhergehenden Ansprüche, **dadurch gekennzeichnet, dass** besagtes mindestens eine niedermolekulare, organische Verdickungsmittel ausgewählt wird aus hydriertem Rizinusöl, 12-Hydroxyoktadec-9-ensäure, 12-Hydroxystearinsäure, einem Glyzerid mit mindestens zwei 12-Hydroxyoktadec-9-ensäure-Resten, Triricinolein, einem Glyzerid mit mindestens zwei 12-Hydroxystearinsäure-Resten, Tris-12-hydroxystearin, 4,6-O-Benzylidenmonosaccharid, C₈-C₂₂-Alkylamidderivate des D-Glucosamins, Harnstoffderivate, Geminitenside (insbesondere N-Lauroyl-L-lysin ethyl ester) oder aus Mischungen daraus.

9. Mikroemulsion nach einem der vorhergehenden Ansprüche, **dadurch gekennzeichnet, dass** als nichtionisches Tensid mindestens ein C₈-₂₀-Alkylether, bevorzugt mindestens ein C₈₋₂₀ Fettalkoholalkoxylat mit 1 bis 10 EO und 0 bis 10 PO, enthalten ist.

10. Mikroemulsion nach einem der vorhergehenden Ansprüche, **dadurch gekennzeichnet, dass** das Tensidsystem zusätzlich mindestens ein anionisches Tensid enthält.

11. Mikroemulsion nach Anspruch 10, **dadurch gekennzeichnet, dass** das mindestens eine anionische Tensid ausgewählt wird aus C₉-C₁₅-Alkylbenzolsulfonat, C₁₀-C₂₀-Alkylethersulfat mit 2 bis 10 Einheiten Alkylenoxid, Dialkylsulfosuccinat der Formel (I) oder Kombinationen daraus, 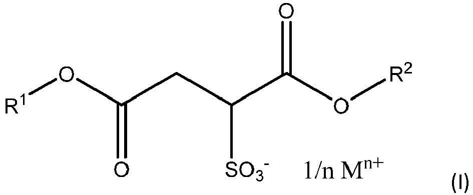 wobei die Reste R¹ und R² jeweils unabhängig voneinander linear oder verzweigt sind und 6 bis 22 Kohlenstoffatome, vorzugsweise 6 bis 12 Kohlenstoffatome, enthalten und besonders bevorzugt ausgewählt werden aus 1-Hexyl, 3,5,5-Trimethyl-1-Hexyl, 2-Ethyl-1-Hexyl, 6-Methyl-1-Heptyl, 2-Methyl-1-Heptyl, 2-Propyl-1-Pentyl, 2,4,4-Trimethyl-1-pentyl, 1-Ethyl-2-Methyl-1-Pentyl und 1,4-Dimethyl-1-hexyl, und 1/n Mⁿ⁺ ein Äquivalent eines n-wertigen Kations ist.

12. Mikroemulsion nach einem der vorhergehenden Ansprüche, **dadurch gekennzeichnet, dass** die Gesamtmenge an besagtem Tensid 2 Gew.-% bis 50 Gew.-% beträgt.

13. Verfahren zur Herstellung einer bei einer Temperatur T1 existenten Mikroemulsion, worin
i) bezogen auf das Gewicht der Mikroemulsion eine Gesamtmenge von 10 Gew.-% bis 99,0 Gew.-% mindestens eines nicht-polymeren, organischen Verdickungsmittels mit einem Molekulargewicht von 100 g/mol bis 1500 g/mol als erste flüssige Phase mit mindestens einer Flüssigkeit als zweite flüssige Phase, mindestens einem Tensid C1 und mindestens einem Tensid C2 gemischt werden, so dass eine trübe Mischung entsteht, und
ii) das Gemisch auf eine Temperatur T1 gebracht und weiter durchgemengt wird, mit der Maßgabe, dass die Temperatur T1 wenigstens so hoch wie der Schmelzpunkt mindestens eines besagten nicht-polymeren, organischen Verdickungsmittels aus Schritt i) ist und eine Mikroemulsion erhalten wird.

14. Flüssige Tensidzusammensetzung, insbesondere Waschmittel, die durch Vermischen einer bezogen auf das Gesamtgewicht der flüssigen Tensidzusammensetzung eine Gesamtmenge von 0,001 Gew.-% bis 5 Gew.-% mindestens einer Mikroemulsion nach einem der Ansprüche 1 bis 9 mit einer Zusammensetzung enthaltend Wasser und mindestens ein Tensid erhalten wird, mit den Maßgaben, dass die flüssige Tensidzusammensetzung jeweils
- eine Gesamtmenge von 5 bis 80 Gew.-% mindestens eines Tensids enthält und
- bei 20°C eine Fließgrenze, bevorzugt von 0,001 bis 6 Pa, aufweist.

15. Verfahren zur Herstellung einer flüssigen Tensidzusammensetzung, insbesondere eines Waschmittels, wobei
a) auf eine Temperatur T2 erwärmte Stoffe vermischt werden mit einer Mikroemulsion der Ansprüche 1 bis 12 bei einer Temperatur T3 und
b) anschließend die Mischung auf eine Temperatur T4 abgekühlt wird,
wobei die Temperaturen T2 und T3 wenigstens so hoch wie der Schmelzpunkt mindestens eines besagten nicht-polymeren, organischen Verdickungsmittels der Mikroemulsion sind und die Temperatur T4 unter dem Schmelzpunkt der besagten nicht-polymeren, organischen Verdickungsmittel liegt.

## Claims

1. A microemulsion, containing, in each case based on the total weight of the emulsion,
a) a liquid phase,
b) a total amount of from 30.0 wt.% to 95.0 wt.% of at least one non-polymeric, organic thickener having a molecular weight in the range of from 100 g/mol to 1500 g/mol as the emulsified phase,
c) a total amount of from 2.0 wt.% to 60.0 wt.% of a surfactant system containing at least one non-ionic surfactant.

2. The microemulsion according to claim 1, **characterized in that** said thickener is in the oil-rich phase of the microemulsion.

3. The microemulsion according to claim 1 or 2, **characterized in that** the liquid phase and the emulsified phase are present as bicontinuous phases or as layers of an L_{α} phase, in particular as bicontinuous phases.

4. The microemulsion according to one of the preceding claims, **characterized in that** the surfactant system has a fishtail point in the range of from 0.01 wt.% to 80 wt.%, preferably 0.1 wt.% to 70 wt.%, particularly preferably 0.2 wt.% to 60 wt.%.

5. The microemulsion according to one of the preceding claims, **characterized in that** the fishtail point is in the range of from 0.01 to 80 wt.% total surfactant and 0.01 to 50 wt.% surfactant C2, preferably 0.1 to 70 wt.% total surfactant and 0.01 to 40 wt.% surfactant C2, most preferably 0.2 to 60 wt.% total surfactant and 0.1 to 35 wt.% surfactant C2.

6. The microemulsion according to one of the preceding claims, **characterized in that** the mean curvature of the amphiphilic film in the single-phase region of the microemulsion is 0 in the temperature range of from 0 to 100 °C, preferably 40 to 98 °C, more preferably 60 to 95 °C.

7. The microemulsion according to one of the preceding claims, **characterized in that** the total amount of said thickener is at least 40 wt.%.

8. The microemulsion according to one of the preceding claims, **characterized in that** said at least one low-molecular-weight, organic thickener is selected from hydrogenated castor oil, 12-hydroxyoctadec-9-anoic acid, 12-hydroxystearic acid, a glyceride having at least two 12-hydroxyoctadec-9-anoic acid functional groups, triricinolein, a glyceride having at least two 12-hydroxystearic acid functional groups, tris-12-hydroxystearin, 4,6-O-benzylidene monosaccharide, C₈-C₂₂ alkylamide derivatives of D-glucosamine, urea derivatives, gemini surfactants (in particular N-lauroyl-L-lysine ethyl ester), or mixtures thereof.

9. The microemulsion according to one of the preceding claims, **characterized in that** at least one C₈₋₂₀ alkyl ether, preferably at least one C₈₋₂₀ fatty alcohol alkoxylate having 1 to 10 EO and 0 to 10 PO, is contained as the non-ionic surfactant.

10. The microemulsion according to one of the preceding claims, **characterized in that** the surfactant system additionally contains at least one anionic surfactant.

11. The microemulsion according to claim 10, **characterized in that** the at least one anionic surfactant is selected from C₉-C₁₅ alkylbenzene sulfonate, C₁₀-C₂₀ alkyl ether sulfate having 2 to 10 units of alkylene oxide, dialkyl sulfosuccinate of formula (I) or combinations thereof, 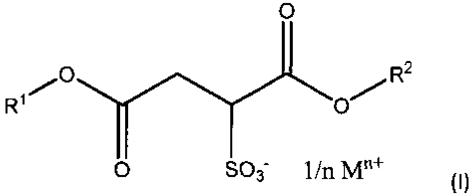 the functional groups R¹ and R², independently of one another, each being linear or branched and containing 6 to 22 carbon atoms, preferably 6 to 12 carbon atoms, and particularly preferably being selected from 1-hexyl, 3,5,5-trimethyl-1-hexyl, 2-ethyl-1-hexyl, 6-methyl-1-heptyl, 2-methyl-1-heptyl, 2-propyl-1-pentyl, 2,4,4-trimethyl-1-pentyl, 1-ethyl-2-methyl-1-pentyl, and 1,4-dimethyl-1-hexyl, and 1/n Mⁿ⁺ being an equivalent of an n-valent cation.

12. The microemulsion according to one of the preceding claims, **characterized in that** the total amount of said surfactant is from 2 wt.% to 50 wt.%.

13. A method for preparing a microemulsion existing at a temperature T1, in which
i) based on the weight of the microemulsion, a total amount of from 10 wt.% to 99.0 wt.% of at least one non-polymeric, organic thickener having a molecular weight of from 100 g/mol to 1500 g/mol as the first liquid phase is mixed with at least one liquid as the second liquid phase, at least one surfactant C1 and at least one surfactant C2, thus producing a cloudy mixture, and
ii) the mixture is brought to a temperature T1 and further mixed thoroughly,
with the proviso that the temperature T1 is at least as high as the melting point of at least one said non-polymeric, organic thickener from step i) and a microemulsion is obtained.

14. A liquid surfactant composition, in particular a washing agent, which is obtained by mixing a total amount, based on the total weight of the liquid surfactant composition, of from 0.001 wt.% to 5 wt.% of at least one microemulsion according to one of claims 1 to 9 with a composition containing water and at least one surfactant, with the proviso that the liquid surfactant composition has
- a total amount of from 5 to 80 wt.% of at least one surfactant and
- a yield point, preferably of from 0.001 to 6 Pa, at 20 °C.

15. A method for preparing a liquid surfactant composition, in particular a washing agent, wherein
a) substances heated to a temperature T2 are mixed with a microemulsion according to claims 1 to 12 at a temperature T3, and
b) the mixture is subsequently cooled to a temperature T4,
wherein the temperatures T2 and T3 are at least as high as the melting point of at least one said non-polymeric, organic thickener of the microemulsion and the temperature T4 is below the melting point of said non-polymeric, organic thickener.

## Revendications

1. Microémulsion, contenant, respectivement par rapport au poids total de l'émulsion,
a) une phase liquide,
b) une quantité totale de 30,0 % en poids à 95,0 % en poids d'au moins un épaississant organique non polymère comportant un poids moléculaire compris dans la plage de 100 g/mol à 1 500 g/mol en tant que phase émulsifiée,
c) une quantité totale de 2,0 % en poids à 60,0 % en poids d'un système tensioactif contenant au moins un tensioactif non ionique.

2. Microémulsion selon la revendication 1, **caractérisée en ce que** ledit épaississant se trouve dans la phase riche en huile de la microémulsion.

3. Microémulsion selon la revendication 1 ou 2, **caractérisée en ce que** la phase liquide et la phase émulsifiée se présentent sous forme de phases bicontinues ou sous forme de couches d'une phase L_{α}, en particulier sous forme de phases bicontinues.

4. Microémulsion selon l'une des revendications précédentes, **caractérisée en ce que** le système tensioactif présente un point en queue de poisson compris dans la plage de 0,01 % en poids à 80 % en poids, préférentiellement de 0,1 % en poids à 70 % en poids, de manière particulièrement préférée de 0,2 % en poids à 60 % en poids.

5. Microémulsion selon l'une des revendications précédentes, **caractérisée en ce que** le point en queue de poisson est compris dans la plage de 0,01 à 80 % en poids de tensioactif total et de 0,01 à 50 % en poids de tensioactif C2, préférentiellement de 0,1 à 70 % en poids de tensioactif total et de 0,01 à 40 % en poids de tensioactif C2, tout particulièrement de 0,2 à 60 % en poids de tensioactif total et de 0,1 à 35 % en poids de tensioactif C2.

6. Microémulsion selon l'une des revendications précédentes, **caractérisée en ce que** la courbure moyenne du film amphiphile dans le domaine monophasique de la microémulsion est égale à 0 dans la plage de température de 0 à 100 °C, de préférence de 40 à 98 °C, préférablement de 60 à 95 °C.

7. Microémulsion selon l'une des revendications précédentes, **caractérisée en ce que** la quantité totale dudit épaississant est d'au moins 40 % en poids.

8. Microémulsion selon l'une des revendications précédentes, **caractérisée en ce que** ledit au moins un épaississant organique de bas poids moléculaire est choisi parmi l'huile de ricin hydrogénée, l'acide 12-hydroxyoctadec-9-énoïque, l'acide 12-hydroxystéarique, un glycéride comportant au moins deux résidus d'acide 12-hydroxyoctadec-9-énoïque, la triricinoléine, un glycéride comportant au moins deux résidus d'acide 12-hydroxystéarique, la tris-12-hydroxystéarine, le monosaccharide de 4,6-O-benzylidène, les dérivés d'alkylamides en C₈-C₂₂ de D-glucosamine, les dérivés d'urée, les tensioactifs géminés (en particulier l'ester éthylique de N-lauroyl-L-lysine) ou leurs mélanges.

9. Microémulsion selon l'une des revendications précédentes, **caractérisée en ce qu'**au moins un éther d'alkyle en C₈₋₂₀, préférentiellement au moins un alcoxylate d'alcool gras en C₈₋₂₀ comportant 1 à 10 EO et 0 à 10 PO est contenu en tant que tensioactif non ionique.

10. Microémulsion selon l'une des revendications précédentes, **caractérisée en ce que** le système tensioactif contient en outre au moins un tensioactif anionique.

11. Microémulsion selon la revendication 10, **caractérisée en ce que** l'au moins un tensioactif anionique est choisi parmi le sulfonate d'alkylbenzène en C₉-C₁₅, le sulfate d'alkyléther en C₁₀-C₂₀ comportant 2 à 10 unités d'oxyde d'alkylène, le sulfosuccinate de dialkyle de formule (I) ou leurs associations, 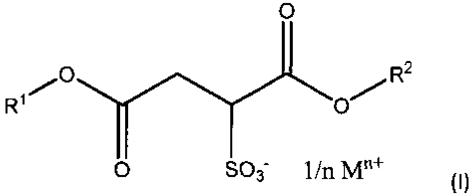 dans laquelle les radicaux R¹ et R² sont respectivement indépendamment linéaires ou ramifiés les uns des autres et contiennent 6 à 22 atomes de carbone, préférentiellement 6 à 12 atomes de carbone, et sont de manière particulièrement préférée choisis parmi le 1-hexyle, 3,5,5-triméthyl-1-hexyle, 2-éthyl-1-hexyle, 6-méthyl-1-heptyle, 2-méthyl-1-heptyle, 2-propyl-1-pentyle, 2,4,4-triméthyl-1-pentyle, 1-éthyl-2-méthyl-1-pentyle et 1,4-diméthyl-1-hexyle, et
1/n Mⁿ⁺ est un équivalent d'un cation n-valent.

12. Microémulsion selon l'une des revendications précédentes, **caractérisée en ce que** la quantité totale dudit tensioactif est de 2 % à 50 % en poids.

13. Procédé permettant la préparation d'une microémulsion existant à une température T1, dans lequel
i) sur la base du poids de la microémulsion, une quantité totale de 10 % en poids à 99,0 % en poids d'au moins un épaississant organique non polymère comportant un poids moléculaire de 100 g/mol à 1 500 g/mol est mélangé, en tant que première phase liquide, avec au moins un liquide en tant que seconde phase liquide, au moins un tensioactif C1 et au moins un tensioactif C2, de sorte qu'un mélange trouble est formé, et
ii) le mélange est porté à une température T1 et mélangé davantage,
à condition que la température T1 soit au moins aussi élevée que le point de fusion d'au moins un desdits épaississants organiques non polymères de l'étape i) et qu'une microémulsion soit obtenue.

14. Composition tensioactive liquide, en particulier détergent, laquelle est obtenue en mélangeant, par rapport au poids total de la composition tensioactive liquide, une quantité totale de 0,001 % en poids à 5 % en poids d'au moins une microémulsion selon l'une des revendications 1 à 9 avec une composition contenant de l'eau et au moins un tensioactif, à condition que la composition tensioactive liquide contienne respectivement
- une quantité totale de 5 à 80 % en poids d'au moins un tensioactif,
- et présente une limite d'écoulement à 20 °C, préférentiellement de 0,001 à 6 Pa.

15. Procédé permettant la préparation d'une composition tensioactive liquide, en particulier d'un détergent, dans lequel
a) les substances chauffées à une température T2 sont mélangées avec une microémulsion des revendications 1 à 12 à une température T3 et
b) le mélange est ensuite refroidi à une température T4,
les températures T2 et T3 étant au moins aussi élevées que le point de fusion d'au moins un desdits épaississants organiques non polymères de la microémulsion et la température T4 étant inférieure au point de fusion desdits épaississants organiques non polymères.
